# EUROPÄISCHE PATENTSCHRIFT

(11) **EP 3 338 974 B1**
(45) Veröffentlichungstag und Bekanntmachung des Hinweises auf die Patenterteilung: **18.08.2021**
(21) Anmeldenummer: 17001897.2
(22) Anmeldetag: 21.11.2017
(51) Int. Cl.: B27B 17/02, B25F 5/02

(54) **HANDGEFÜHRTES ARBEITSGERÄT**
MANUALLY OPERATED WORK DEVICE
APPAREIL DE TRAVAIL PORTATIF

(30) Priorität: 22.11.2016 DE 102016013907
(43) Veröffentlichungstag der Anmeldung: 27.06.2018
(73) Patentinhaber: Andreas Stihl AG & Co. KG, 71336 Waiblingen (DE)
(72) Erfinder: Geromiller, Ludwig, D-73642 Welzheim (DE)
(74) Vertreter: Reinhardt, Annette

(56) Entgegenhaltungen:
- EP-A1- 2 832 497
- WO-A1-2015/180828
- DE-A1- 10 325 663

## Beschreibung

Die Erfindung betrifft ein handgeführtes Arbeitsgerät der im Oberbegriff des Anspruchs 1 angegebenen Gattung.

Aus der DE 103 25 663 A1 ist ein handgeführtes Arbeitsgerät mit einem Ausleger, gemäß dem Oberbegriff des Anspruchs 1, nämlich ein handgeführter, motorgetriebener Trennschleifer, bekannt. Der Ausleger des Trennschleifers besitzt an seiner Innenseite Verstärkungsstreben zur Versteifung. Die Verstärkungsstreben verlaufen benachbart zu einer Umfangswand des Auslegers.

Aus der WO 2015/180828 A1 geht ein Trennschleifer mit einem Ausleger hervor, der an seiner Innenseite Versteifungsstrukturen aufweist.

Die EP 2 832 497 A1 zeigt einen Trennschleifer, bei dem Ausleger und Schutzhaube einteilig miteinander ausgebildet sind.

Der Erfindung liegt die Aufgabe zugrunde, ein handgeführtes Arbeitsgerät der gattungsgemäßen Art zu schaffen, dessen Ausleger eine hohe Steifigkeit bei geringem Gewicht besitzt.

Diese Aufgabe wird durch ein Arbeitsgerät mit den Merkmalen des Anspruchs 1 gelöst.

Es ist vorgesehen, dass das Tragteil des Auslegers nicht nur auf seiner Innenseite, sondern auch auf seiner Außenseite eine Versteifungsstruktur besitzt. Die Versteifungsstrukturen sind derart auf der Grundplatte angeordnet, dass sie ein räumlich diagonal verlaufendes Versteifungselement bilden.

Es hat sich gezeigt, dass die im Betrieb entstehenden Torsionsschwingungen am Tragteil des Auslegers gut durch räumlich diagonal verlaufende Versteifungselemente aufgenommen werden können. Die diagonale Richtung bezieht sich dabei auf die Längsrichtung des Tragteils, eine senkrecht hierzu stehende Hochrichtung des Tragteils sowie eine Tiefenrichtung des Tragteils. Das Tragteil besitzt ein Koordinatensystem, das durch die Längsrichtung des Tragteils und eine senkrecht hierzu stehende Hochrichtung aufgespannt wird. Das Tragteil besitzt eine erste Achse, um die die Antriebswelle rotierend angetrieben ist, sowie eine zweite Achse, um die die Abtriebswelle rotierend angetrieben ist. Die Verbindungslinie der beiden Achsen in einer Blickrichtung in Richtung der ersten Achse bildet die x-Achse des Koordinatensystems. Die Blickrichtung in Richtung der ersten Achse ist dabei eine Blickrichtung, in der das Motorgehäuse hinter dem Ausleger liegt. In dieser Blickrichtung ist die x-Achse von der ersten Achse zur zweiten Achse gerichtet. Die Verbindungslinie ist im Raum senkrecht zur ersten Achse und zur zweiten Achse angeordnet. Die x-Achse verläuft im Raum senkrecht zu den Achsen von Antriebswelle und Abtriebswelle. Die y-Achse steht im Raum senkrecht zur Verbindungslinie der beiden Achsen und zur ersten Achse. In der Blickrichtung in Richtung der ersten Achse verläuft die y-Achse mittig zwischen der ersten und der zweiten Achse. Die y-Achse, die die Hochrichtung bildet, schneidet die Verbindungslinie der ersten und der zweiten Achse von Antriebswelle und Abtriebswelle dadurch mittig zwischen den beiden Achsen.

Das zweidimensionale, kartesische Koordinatensystem aus x-Achse und y-Achse besitzt vier Sektoren, die durch die positive x-Achse und die positive y-Achse, die positive x-Achse und die negative y-Achse, die negative x-Achse und die negative y-Achse und die negative x-Achse und die positive y-Achse begrenzt werden. In diesen vier Sektoren des Koordinatensystems liegt jeweils auf der Innenseite und auf der Außenseite des Tragteils ein Segment des Tragteils. Die Segmente werden demnach von der Grundplatte des Tragteils und den Achsen des Koordinatensystems voneinander getrennt. Die Segmente des Tragteils grenzen dabei aneinander oder an die Grundplatte an. Die diagonale Richtung wird durch eine Raumdiagonale definiert, die ein Segment auf der Außenseite und ein bezüglich des Ursprungs des Koordinatensystems gegenüberliegendes Segment auf der Innenseite verläuft. Das bezüglich des Ursprungs des Koordinatensystems gegenüberliegende Segment besitzt sowohl für die x-Richtung als auch für die y-Richtung ein umgekehrtes Vorzeichen.

Das Tragteil besitzt eine erste Versteifungsstruktur, die sich von der Innenseite der Grundplatte zu der Raumdiagonale hin erhebt. Von der Außenseite der Grundplatte erhebt sich mindestens eine zweite Versteifungsstruktur zu derselben Raumdiagonalen hin. Dadurch wird ein räumlich diagonal verlaufendes Versteifungselement gebildet. Über dieses räumlich diagonal verlaufende Versteifungselement können insbesondere Torsionsschwingungen sehr gut aufgenommen werden. Auf der jeweils gegenüberliegenden Seite der Grundplatte ist bevorzugt mindestens teilweise keine Versteifungsstruktur vorgesehen. Die Grundplatte bezeichnet den unversteiften, plattenförmigen Teil des Tragteils, an den die Erhebungen anschließen. Die Seiten der Grundplatte sind die Innenseite und die Außenseite.

Das Versteifungselement kann als sich räumlich diagonal durch die Grundplatte hindurch erstreckende, ununterbrochene Versteifungsstrebe ausgebildet sein. Besonders bevorzugt wird das Versteifungselement jedoch mindestens teilweise durch zweckmäßige Anordnung bereits vorhandener Erhebungen wie beispielsweise Befestigungsaugen oder Aufnahmetaschen gebildet. Ein Versteifungselement kann demnach insbesondere auch durch voneinander beabstandete, sich partiell erhebende Versteifungsstrukturen gebildet sein. Das Versteifungselement kann in Bereichen, in denen die Raumdiagonale an der Außenseite verläuft, auch partielle Versteifungsstrukturen an der Innenseite umfassen und umgekehrt. Hierbei erheben sich die Versteifungsstrukturen an dem ersten Ende des Versteifungselements aber überwiegend von der einen Seitenfläche des Tragteils und an dessen anderem Ende überwiegend von der anderen Seitenfläche des Tragteils und in einem mittleren Bereich vorteilhaft auf keiner der beiden Seitenflächen oder lediglich mit einer geringeren Ausdehnung als an den Enden Die Enden des Versteifungselementes liegen benachbart zu einem Abschnitt der Umfangswand, und der mittlere Bereich des Versteifungselementes verläuft in einem Mittelbereich des Tragteils.

Vorteilhaft besitzen höchstens 30% der Fläche der Grundplatte sowohl an der Außenseite als auch an der Innenseite im selben Wandabschnitt der Grundplatte Versteifungsstrukturen. Bevorzugt sind die Versteifungsstrukturen in mindestens 70% der Fläche der Grundplatte entweder an der Außenseite oder an der Innenseite vorgesehen oder es sind weder Versteifungsstrukturen auf der Innenseite noch auf der Außenseite vorgesehen. Vorteilhaft besitzen die erste Versteifungsstruktur und die zweite Versteifungsstruktur jeweils mindestens einen Teilbereich, der im selben Wandabschnitt auf der gegenüberliegenden Seite der Grundplatte keine Versteifungsstruktur besitzt und der als zusammenhängender Bereich mit einem Flächeninhalt von mindestens 2 cm² ausgebildet ist. Der Teilbereich besitzt vorteilhaft eine in Richtung der x-Achse gemessene Länge und eine in Richtung der y-Achse gemessene Breite, wobei die Länge und die Breite des Teilbereichs jeweils mindestens 1 cm betragen. Der Teilbereich besitzt dabei bevorzugt in jeder Richtung in Seitenansicht auf die xy-Ebene eine Erstreckung von mindestens 1 cm.

Um Torsionsspannungen gut aufnehmen zu können, ist vorteilhaft vorgesehen, dass die erste Versteifungsstruktur und die zweite Versteifungsstruktur sich in einem Wandabschnitt der Grundplatte teilweise überlappen. In diesem Wandabschnitt sind demnach sowohl Versteifungsstrukturen auf der Innenseite als auch Versteifungsstrukturen auf der Außenseite vorgesehen. Dadurch wird eine gute Übertragung der Kräfte durch die Grundplatte von der Außenseite auf die Innenseite ermöglicht. Vorteilhaft liegt eine erste Versteifungsstruktur in einer Richtung parallel zur ersten Achse oder zur zweiten Achse nicht vollständig mit einer zweiten Versteifungsstruktur in Überdeckung.

Eine Versteifungsstruktur, die sich an demselben Wandabschnitt sowohl von der Innenseite als auch von der Außenseite erhebt, wird vorteilhaft in eine auf der Innenseite liegende und eine auf der Außenseite liegende Teilversteifungsstruktur unterteilt. Teilversteifungsstrukturen werden als zu derselben Versteifungsstruktur gehörend betrachtet, wenn sie sich direkt gegenüberliegen oder innerhalb eines Umkreises mit einem Radius ihrer Höhe gegenüberliegen. Aus den einzelnen Höhen der Teilversteifungsstrukturen, die mit unterschiedlichem Vorzeichen berücksichtigt werden, wird die Nettohöhe der Versteifungsstruktur ermittelt. Die Nettohöhe der Versteifungsstrukturen ist die Summe der parallel zur ersten Achse gemessenen Höhen der Teilversteifungsstrukturen auf gegenüberliegenden Seiten desselben Wandabschnitts der Grundplatte. Die Teilversteifungsstrukturen, die sich auf der Außenseite erstrecken, werden mit negativem Vorzeichen berücksichtigt und Teilversteifungsstrukturen, die sich auf die Innenseite erheben, werden mit positivem Vorzeichen berücksichtigt. Demnach werden die Höhen der auf die Außenseite ragenden Teilversteifungsstrukturen von den Höhen der auf die Innenseite ragenden Teilversteifungsstrukturen abgezogen. Sind die Teilversteifungsstrukturen auf der Außenseite höher als die an der Innenseite, so ergibt sich eine negative Nettohöhe der Versteifungsstruktur. Es ist vorgesehen, die Versteifungsstrukturen so anzuordnen, dass die Nettohöhe von Versteifungsstrukturen, die sich zu derselben Raumdiagonale erheben, entlang der Raumdiagonale ihr Vorzeichen wechselt. Die Nettohöhe beträgt vorteilhaft in mindestens einem Punkt, der einen Abstand von höchstens 2 cm zum Ursprung des Koordinatensystems besitzt, null. Die Nettohöhe kann auf beiden Seiten des Punktes, in dem die Nettohöhe null beträgt, das gleiche Vorzeichen besitzen. Vorteilhaft wechselt das Vorzeichen der Nettohöhe entlang der Raumdiagonale höchstens dreimal und insbesondere ein einziges Mal.

Die Raumdiagonale ist vorteilhaft so angeordnet, dass sie auf der Außenseite eine zweite Versteifungsstruktur und auf der Innenseite eine erste Versteifungsstruktur schneidet. Die Raumdiagonale verläuft demnach durch die Versteifungsstrukturen hindurch oder begrenzt diese. Die Versteifungsstrukturen erheben sich von einer Seitenfläche der Grundplatte zu einer Raumdiagonale. Die Versteifungsstruktur kann hierbei Bereiche besitzen, die nicht bis an die Raumdiagonale heranreichen und/oder Bereiche besitzen, die sich über die Raumdiagonale hinaus erheben. Bevorzugt schneidet die Raumdiagonale die Umfangswand des Tragteils. Die Umfangswand erhebt sich dabei über mindestens 50% ihrer Länge von der Innenseite. Die Umfangswand schließt vorteilhaft über mindestens 50% ihrer Länge, bevorzugt mindestens 70% ihre Länge auf der Außenseite bündig mit der Grundplatte ab. Die Umfangswand erhebt sich demnach über mindestens 50% ihrer Länge, insbesondere mindestens 70% ihrer Länge ausschließlich von der Innenseite und nicht von der Außenseite.

Vorteilhaft schließt eine erste Raumdiagonale mit der x-Achse einen Winkel von 20° bis 70° ein. Eine zweite Raumdiagonale schließt mit der x-Achse vorteilhaft einen Winkel von -20° bis -70° ein. Die beiden Raumdiagonalen sind demnach zueinander um einen Winkel von 40° bis 140° geneigt. Ein positiver Winkel ergibt sich, wenn der Winkel von der Raumdiagonalen zur x-Achse im Uhrzeigersinn verläuft. Ein negativer Winkel ergibt sich, wenn der Winkel von der Raumdiagonalen zur x-Achse entgegen dem Uhrzeigersinn verläuft.

Die Grundplatte des Tragteils besitzt vorteilhaft eine erste Öffnung, durch die die Antriebswelle verläuft, sowie eine zweite Öffnung, durch die die Abtriebswelle verläuft. Die Umfangswand besitzt einen ersten Abschnitt und einen zweiten Abschnitt, die an gegenüberliegenden Seiten der Grundplatte in Längsrichtung des Auslegers verlaufen. Der erste Abschnitt der Umfangswand ist vorteilhaft der Abschnitt mit positiver y-Koordinate und der zweite Abschnitt der Umfangswand der Abschnitt mit negativer y-Koordinate. Vorteilhaft erstreckt sich mindestens ein Versteifungselement in dem zwischen der ersten Achse und der zweiten Achse angeordneten Bereich von dem ersten Abschnitt der Umfangswand zu dem zweiten Abschnitt der Umfangswand. Insbesondere sind alle Versteifungselemente, die sich entlang einer Raumdiagonale von der Außenseite auf die Innenseite erstrecken, bezüglich der Längsrichtung des Tragteils zwischen den beiden Achsen angeordnet. Die Längsrichtung des Tragteils ist dabei vorteilhaft die in x-Richtung liegende Richtung des Tragteils.

Insbesondere erstreckt sich mindestens ein Versteifungselement in dem in einem Bereich zwischen der ersten Achse und der zweiten Achse von einem der Abschnitte der Umfangswand zu dem anderen Abschnitt der Umfangswand und von der einen Seite der Grundplatte auf die andere Seite der Grundplatte, wobei die Außenseite und die Innenseite die zwei Seiten der Grundplatte sind. Die Raumdiagonalen schneiden die Umfangswand in der Blickrichtung in Richtung der ersten Achse demnach in dem zwischen den Achsen, insbesondere in dem in x-Richtung zwischen den Öffnungen angeordneten Bereich. Die Versteifungselemente erstrecken sich demnach zwischen den Achsen und insbesondere weitgehend, bevorzugt vollständig zwischen den Öffnungen.

Vorteilhaft besitzt die Grundplatte benachbart zur zweiten Öffnung einen Bereich ohne Versteifungsstrukturen. Der Bereich ohne Versteifungsstrukturen erstreckt sich vorteilhaft vom ersten Abschnitt der Umfangwand zu dem zweiten Abschnitt der Umfangswand. Der Bereich ohne Versteifungselemente entkoppelt das Lagerauge für die Abtriebswelle von dem in Richtung auf die Öffnung für die Antriebswelle anschließenden Bereich. Es hat sich überraschend gezeigt, dass sich durch die in diesem Bereich verringerte Steifigkeit des Tragteils eine erhöhte Lebensdauer des Tragteils ergibt. Der Bereich ohne Versteifungsstrukturen erstreckt sich vorteilhaft über einen Umfangswinkel um die zweite Öffnung von mindestens 60°. Der Bereich ohne Versteifungsstrukturen besitzt vorteilhaft einen Flächeninhalt von mindestens 4 cm². Eine parallel zur y-Achse gemessene Länge des Bereichs ohne Versteifungsstrukturen beträgt vorteilhaft mindestens 5 cm, insbesondere mindestens 8 cm.

Die Raumdiagonale schneidet in der Blickrichtung in Richtung der ersten Achse einen Abschnitt der Umfangswand in einer ersten Schnittstelle und den anderen Abschnitt der Umfangswand in einer zweiten Schnittstelle. Die erste Schnittstelle besitzt zur ersten Öffnung vorteilhaft einen Abstand von weniger als dem Durchmesser von mindestens einer der Öffnungen. Besonders vorteilhaft ist der Abstand der ersten Schnittstelle zur ersten Öffnung kleiner als der Durchmesser der kleineren der beiden Öffnungen. Der Abstand der ersten Schnittstelle zur ersten Öffnung ist insbesondere kleiner als der Durchmesser der ersten Öffnung. Die erste Schnittstelle besitzt zur ersten Öffnung vorteilhaft einen Abstand von weniger als 10 cm, insbesondere weniger als 8 cm. Der Bereich ohne Versteigungsstrukturen verläuft zwischen der zweiten Schnittstelle und der zweiten Öffnung. Durch die Anordnung des Bereichs ohne Versteifungsstrukturen zwischen der zweiten Schnittstelle und der zweiten Öffnung werden die aufzunehmenden Torsionskräfte über die Versteifungsstrukturen in die Umfangswand eingeleitet, so dass keine unmittelbare Krafteinleitung in das Lagerauge an der zweiten Öffnung erfolgt. Die erste Schnittstelle ist jeweils vergleichsweise nah an der ersten Öffnung angeordnet, so dass eine gute Krafteinleitung zur ersten Öffnung erfolgt.

Die zweite Öffnung ist vorteilhaft an einem Lagerauge ausgebildet, das von einer ringförmigen Wand umgeben ist. An der ringförmigen Wand ist vorteilhaft eine Versteifungsstruktur angeordnet, die sich zu der Umfangswand des Tragteils erstreckt. An die Versteifungsstruktur schließt der Bereich ohne Versteifungsstrukturen vorteilhaft an.

Mindestens eine Versteifungsstruktur umfasst vorteilhaft eine sich aus der Grundplatte linienförmig erhebende Versteifungsrippe. Bevorzugt umfasst mindestens eine Versteifungsstruktur eine sich aus der Grundplatte flächig erhebende Versteifungstasche. Eine bevorzugte Gestaltung ergibt sich, wenn sich mindestens die Hälfte der Versteifungstaschen auf die Außenseite erhebt. In besonders bevorzugter Gestaltung erheben sich alle Versteifungstaschen auf die Außenseite. Über Versteifungstaschen kann auf einfache Weise eine Versteifungsstruktur auf der Außenseite geschaffen werden, die zum einen den im Inneren des Auslegers zur Verfügung stehenden Bauraum erhöht und zum anderen eine geringe Verschmutzungsneigung auf der mit der Umgebung in Kontakt stehenden Außenseite besitzt.

Bevorzugt umfasst das Versteifungselement mindestens eine Versteifungsrippe und mindestens eine Versteifungstasche. Vorteilhaft erhebt sich mindestens eine der Versteifungsstrukturen von Versteifungsrippe und Versteifungstasche von der Innenseite der Grundplatte und mindestens eine andere der Versteifungsstrukturen von Versteifungsrippe und Versteifungstasche von der Außenseite der Grundplatte. Besonders bevorzugt erheben sich mindestens eine Versteifungstasche von der Außenseite der Grundplatte und mindestens eine Versteifungsrippe von der Innenseite der Grundplatte. Es kann jedoch auch vorgesehen sein, dass sich mindestens eine Versteifungstasche von der Innenseite der Grundplatte und mindestens eine Versteifungsrippe von der Außenseite der Grundplatte erheben.

Vorteilhaft ist an der ersten Öffnung ein erstes Lagerauge und an der zweiten Öffnung ein zweites Lagerauge angeordnet, wobei sich ein Lagerauge überwiegend auf der Innenseite erhebt, und wobei sich das andere Lagerauge von der Innenseite und der Außenseite der Grundplatte erhebt.

Ausführungsbeispiele der Erfindung werden im Folgenden anhand der Zeichnung erläutert. Es zeigen:
- Fig. 1: eine schematische Seitenansicht eines Trennschleifers,
- Fig. 2: eine schematische Schnittdarstellung des Trennschleifers aus Fig. 1,
- Fig. 3: eine perspektivische Darstellung des Tragteils des Auslegers mit darin angeordnetem Riementrieb,
- Fig. 4: eine perspektivische Darstellung der Innenseite des Tragteils,
- Fig. 5: eine perspektivische Darstellung der Außenseite des Tragteils,
- Fig. 6: eine Seitenansicht der Außenseite des Tragteils parallel zur x-y-Ebene,
- Fig. 7: eine Seitenansicht der Innenseite des Tragteils parallel zur x-y-Ebene,
- Fig. 8: eine schematische Darstellung der Unterteilung des Tragteils in Segmente,
- Fig. 9: eine schematische Darstellung des Tragteils in Seitenansicht mit schematischer Darstellung der Versteifungsstrukturen,
- Fig. 10: eine schematische Darstellung der Versteifungsstrukturen des Tragteils in einer Ansicht von oben,
- Fig. 11: einen Schnitt entlang der Linie XI-XI in Fig. 7,
- Fig. 12: eine Darstellung der Schnittebene aus Fig. 11,
- Fig. 13: einen Schnitt entlang der Linie XIII-XIII in Fig. 7,
- Fig. 14: eine Darstellung der Schnittebene aus Fig. 13,
- Fig. 15: einen Schnitt entlang der Linie XV-XV in Fig. 7,
- Fig. 16: eine Darstellung der Schnittebene aus Fig. 15.

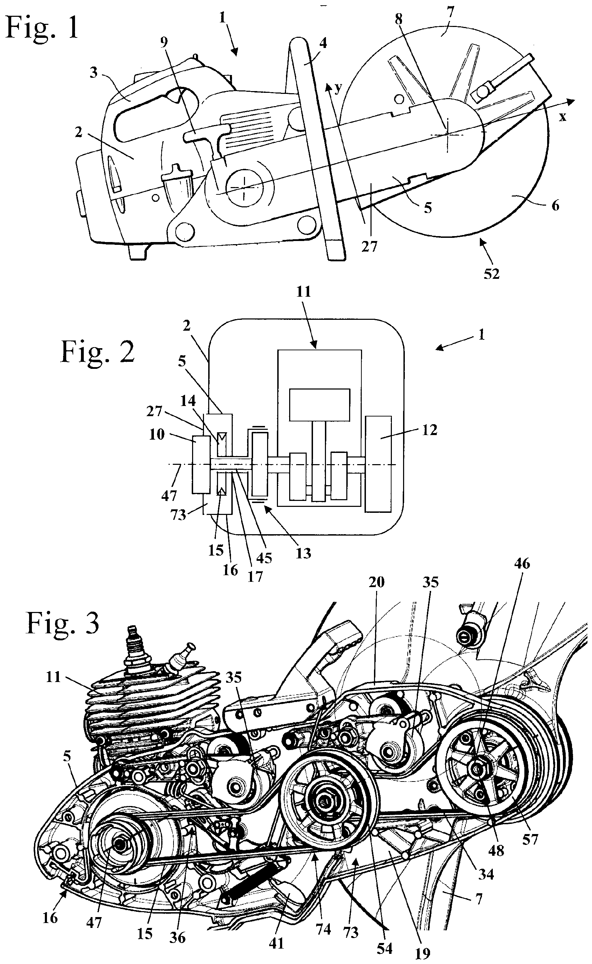

Fig. 1 zeigt als Ausführungsbeispiel für ein handgeführtes Arbeitsgerät einen Trennschleifer 1. Der Trennschleifer 1 besitzt ein Motorgehäuse 2, einen hinteren Handgriff 3 sowie einen vorderen Handgriff 4 zum Führen des Trennschleifers 1. Der Trennschleifer 1 kann jedoch auch auf einem Führungswagen montiert und vom Bediener über den Boden gefahren werden. Am Motorgehäuse 2 ist ein Ausleger 5 fixiert, an dessen freiem, dem Motorgehäuse 2 abgewandten Ende ein scheibenförmiges Werkzeug, im Ausführungsbeispiel eine Trennscheibe 6, drehbar gelagert ist. Das Werkzeug des Trennschleifers 1 ist vorteilhaft an seinem Außenumfang teilweise von einer Schutzhaube 7 umgeben. Die Trennscheibe 6 ist um eine Drehachse 8 rotierend angetrieben. Zum Antrieb der Trennscheibe 6 ist im Motorgehäuse 2 ein Antriebsmotor 11 (Fig. 2) angeordnet. Das Motorgehäuse 2 ist über den Ausleger 5 mit einer Werkzeugeinheit 52 verbunden. Die Werkzeugeinheit 52 beinhaltet die Trennscheibe 6 und die Schutzhaube 7. Der Ausleger 5 besitzt einen in Fig. 1 schematisch gezeigten Deckel 27, der den Ausleger 5 zu der dem Motorgehäuse 2 abgewandten Seite begrenzt. Zum Starten des Antriebsmotors 11 ist vorteilhaft eine Anwerfvorrichtung 10 (Fig. 2) vorgesehen, deren Anwerfgriff 9 im Ausführungsbeispiel aus dem Motorgehäuse 2 ragt (Fig. 1).

Fig. 2 zeigt einen Teil des Antriebsstrangs des Trennschleifers 1. Der Antriebsmotor 11 ist vorteilhaft ein Verbrennungsmotor, insbesondere ein Zweitaktmotor oder ein gemischgeschmierter Viertaktmotor. Der Antriebsmotor 11 ist vorteilhaft ein Einzylindermotor. Der Antriebsmotor 11 kann jedoch auch ein Elektromotor sein. Der Antriebsmotor 11 treibt über eine Fliehkraftkupplung 13 eine Antriebswelle 45 an. Die Antriebswelle 45 ragt durch eine erste Öffnung 17 im Ausleger 5 in einen Innenraum 73 des Auslegers 5. Der Innenraum 73 ist von einem am Motorgehäuse 2 festgelegten Tragteil 16 und dem am Tragteil 16 fixierten Deckel 27 begrenzt. Der Ausleger 5 ist fest an der Motoreinheit 51 fixiert. Eine Verstellung der Position des Auslegers 5 gegenüber der Motoreinheit 51 ist nicht vorgesehen.

Im Ausleger 5 ist eine drehfest mit der Antriebswelle 45 verbundene Riemenscheibe 14 angeordnet, die die Eingangswelle eines Riementriebs 74 (Fig. 3) bildet. Die Riemenscheibe 14 treibt einen ersten Antriebsriemen 15 an. An der dem Antriebsmotor 11 abgewandten Seite der Riemenscheibe 14 ist die Anwerfvorrichtung 10 angeordnet. Die Anwerfvorrichtung 10 wirkt auf das Antriebsteil der Fliehkraftkupplung 13, das drehfest mit einer Kurbelwelle des Antriebsmotors 11 verbunden ist. An der der Fliehkraftkupplung 13 abgewandten Seite des Antriebsmotors 11 ist ein Lüfterrad 12 zur Förderung von Kühlluft für den Antriebsmotor 11 angeordnet.

Fig. 3 zeigt den im Ausleger 5 angeordneten Riementrieb 74, der die rotierende Antriebsbewegung des Antriebsmotors 11 auf eine Abtriebswelle 46 überträgt. An der Abtriebswelle 46 ist die Trennscheibe 6 (Fig. 1) drehfest fixiert. In Fig. 3 ist der Deckel 27 des Auslegers 5 nicht gezeigt, sondern lediglich das Tragteil 16 des Auslegers. Das Tragteil 16 besitzt eine Grundplatte 19 und eine Umfangswand 20, die sich von der Grundplatte 19 überwiegend auf die dem Antriebsmotor 11 abgewandte Seite der Grundplatte 19 erstreckt. Das Tragteil 16 wird auf der dem Antriebsmotor 11 abgewandten Seite durch den Deckel 27 (Fig. 1) verschlossen und bildet mit diesem den Ausleger 5. Der Deckel 27 liegt an der Umfangswand 20 an und begrenzt mit der Grundplatte und der Umfangswand einen Innenraum 73 des Tragteils.

Der Riementrieb 74 des Trennschleifers 1 ist im Ausführungsbeispiel als zweistufiger Riementrieb 74 ausgebildet und umfasst neben dem Antriebsriemen 15, der auch in Fig. 2 schematisch gezeigt ist, einen weiteren Antriebsriemen 34. Der Antriebsriemen 15 ist über die in Fig. 2 schematisch gezeigte Riemenscheibe 14 sowie eine zweite, größere Riemenscheibe 54 geführt. Der weitere Antriebsriemen 34 ist über eine erste, nicht gezeigte, in der Ansicht in Fig. 3 hinter der Riemenscheibe 54 angeordnete Riemenscheibe sowie eine Riemenscheibe 57 geführt. Der Riementrieb 74 ist als Untersetzungsgetriebe ausgeführt, so dass die Drehzahl der Abtriebswelle 46 geringer ist als die der Antriebswelle 45 (Fig. 2). Die Antriebswelle 45 rotiert um eine erste Achse 47 und die Abtriebswelle 46 um eine zweite Achse 48. Die Achsen 47 und 48 verlaufen parallel zueinander und näherungsweise senkrecht zur Grundplatte 19. An den Antriebsriemen 15 und 34 liegen Spannrollen 35 an, die für eine ausreichende Riemenspannung sorgen.

Der Trennschleifer 1 besitzt vorteilhaft eine Bremseinrichtung 36, die ebenfalls in Fig. 3 gezeigt ist.

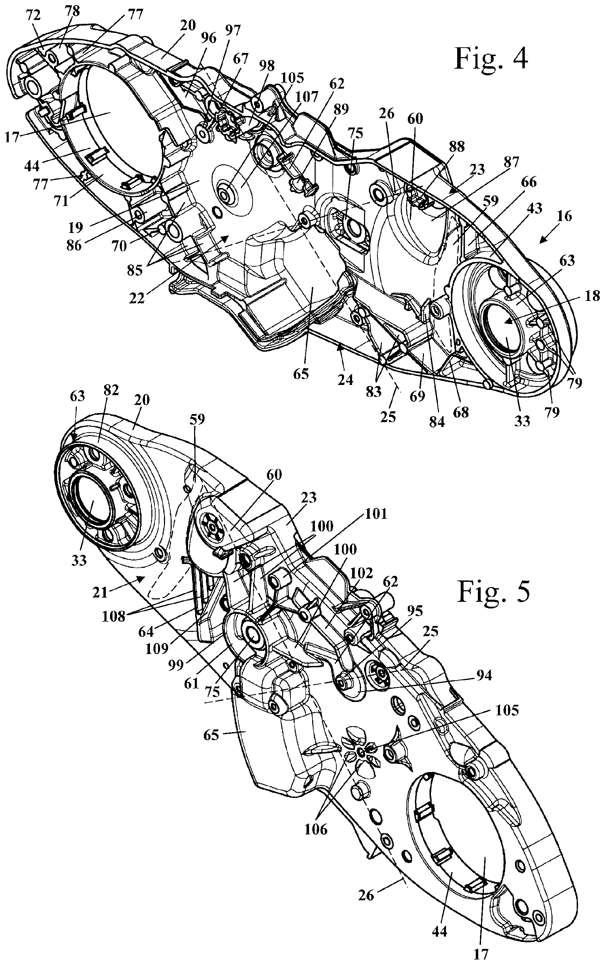

Im Betrieb ist das Tragteil 16 hohen Belastungen ausgesetzt. Es hat sich gezeigt, dass insbesondere die Torsionsbelastungen, die bei einer Verdrehung der zweiten Achse 48 gegenüber der ersten Achse 47 um die Längsmittelachse des Auslegers 5, also um die in Fig. 1 eingezeichnete x-Achse, kritisch sind. Um diese Belastungen gut aufnehmen zu können und gleichzeitig ein geringes Gewicht des Auslegers 5 zu erreichen, ist die in den Fig. 4 und 5 gezeigte Gestaltung des Tragteils 16 vorgesehen.

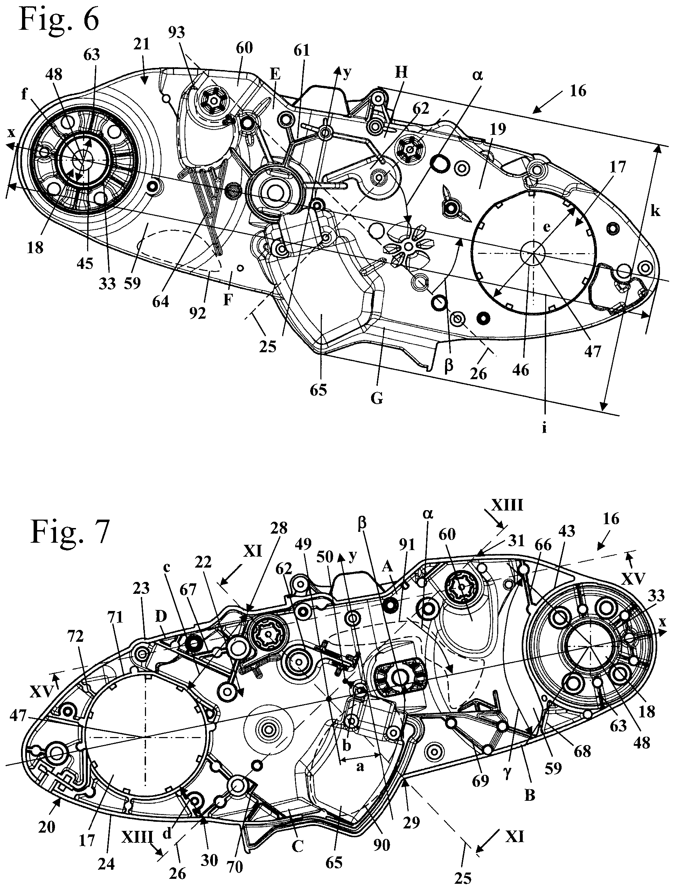

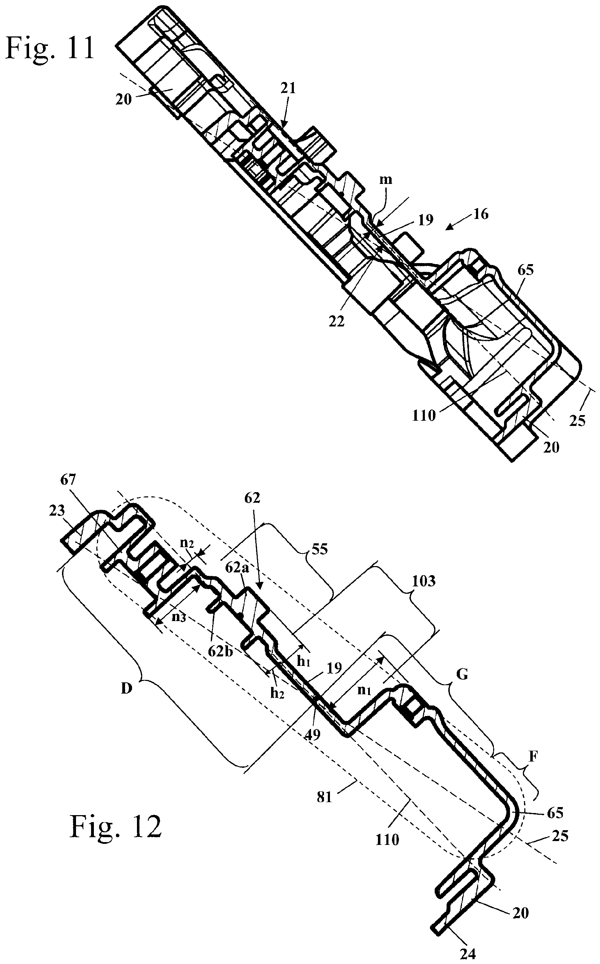

Die Grundplatte 19 ist der plattenförmige Teil des Tragteils 16, der dem Deckel 27 gegenüberliegt. Die Grundplatte 19 erstreckt sich mit dem größten Teil ihrer Fläche parallel zur Ebene der Trennscheibe 6 und mit dem anderen Teil ihrer Fläche in einem Winkel von kleiner 30°, insbesondere kleiner als 20° zur Ebene der Trennscheibe 6. Die Grundplatte 19 besitzt eine Grundplattenmittelebene. Die Grundplatte 19 weist eine Innenseite 22 (Fig. 4) und eine Außenseite 21 (Fig. 5) auf, zwischen denen mittig die Grundplattenmittelebene liegt. Das Tragteil 16 hat eine in der Grundplattenmittelebene und in Längsrichtung des Tragteils 16 gemessene Tragteillänge i und eine senkrecht zur Längsrichtung gemessene Tragteilhöhe k (Fig. 6). Die Tragteillänge i ist parallel zur x-Richtung gemessen. Die Tragteilhöhe k ist parallel zur y-Richtung gemessen. Senkrecht zur Grundplattenmittelebene besitzt die Grundplatte 16 eine Wandstärke m, die in Fig. 11 eingezeichnet ist. Die Wandstärke m ist zwischen der Innenseite 22 und der Außenseite 21 der Grundplatte 19 gemessen. Die Wandstärke m ist um ein Vielfaches kleiner als die Tragteillänge i und die Tragteilhöhe k. Vorteilhaft beträgt die Wandstärke m weniger als 1 cm, insbesondere weniger als 0,5 cm. Die Außenseite 21 der Grundplatte 19 ist vorteilhaft dem Motorgehäuse 2 (Fig. 1) zugewandt. Die Innenseite 22 der Grundplatte 19 ist vorteilhaft dem Deckel 27 (Fig. 1) zugewandt. Das Tragteil 16 umfasst die sich am Umfang der Grundplatte 19 zum Deckel 27 hin erhebende Umfangswand 20 (Fig. 3). Das Tragteil 16 liegt mit einem Anschlussbereich der Außenseite der Grundplatte 19 an dem Motorgehäuse 2 an. Der Anschlussbereich erstreckt sich um die erste Öffnung 17 der Grundplatte 19, wie Fig. 5 zeigt.

Fig. 4 zeigt eine perspektivische Darstellung der Innenseite 22 der Grundplatte 19. Die Innenseite 22 begrenzt den Innenraum 73 des Auslegers 5 (Fig. 2). An der Grundplatte 19 ist umlaufend die Umfangwand 20 angeordnet. Die Umfangswand 20 erhebt sich über den überwiegenden Teil ihrer Länge ausschließlich von der Innenseite 22 der Grundplatte 19 in Richtung auf den Deckel 23. Die Umfangswand 20 erhebt sich über mindestens 50% ihrer Länge, insbesondere mindestens 70% ihrer Länge ausschließlich von der Innenseite 22. Dabei ragt die Umfangswand 20 in den Bereichen, in denen sie sich ausschließlich von der Innenseite 22 erhebt, nicht von der gegenüberliegenden Außenseite 21 (Fig. 5) hervor. Die Umfangswand 20 schließt auf der Außenseite 21 über mindestens 50%, insbesondere mindestens 70% ihrer Länge bündig mit der Grundplatte 19 ab.

Die Grundplatte 19 besitzt die Öffnung 17, die von einer Begrenzungswand 44 begrenzt ist. Die Begrenzungswand 44 verläuft zylindrisch um die erste Achse 47 (Fig. 3) und bildet eine Versteifungsstruktur 71. Die Grundplatte 19 besitzt außerdem eine zweite Öffnung 18, die am freien, vom Motorgehäuse 2 weg ragenden Ende des Tragteils 16 angeordnet ist. Die zweite Öffnung 18 ist an einer Nabe ausgebildet, die ein Lagerauge 33 bildet und die von einer ringförmigen inneren Wand 43 in einem Abstand umgeben ist. Das Lagerauge 33 ist als zylindrische Umfangswand ausgebildet. Im Lagerauge 33 ist die Abtriebswelle 46 (Fig. 3) drehbar gelagert. Die Antriebswelle 45 (Fig. 2) ragt durch die erste Öffnung 17 und die Abtriebswelle 46 (Fig. 3) durch die zweite Öffnung 18. An der der zweiten Öffnung 18 abgewandten Seite der ersten Öffnung 17 erstreckt sich zwischen der Begrenzungswand 44 und der Umfangswand 20 eine Versteifungsstruktur 72, die durch Versteifungsrippen 77 sowie Versteifungsaugen 78 gebildet ist. Teil des Bereichs der Grundplatte 19, in dem sich die Versteifungsstruktur 72 erstreckt, sind auch die zwischen Versteifungsrippen 77 und Versteifungsaugen 78 angeordneten Bereiche der Grundplatte 19, soweit der Abstand der Elemente der Versteifungsstruktur weniger als 4 cm beträgt.

Das Lagerauge 33 ist in einem radialen Abstand nach außen von einer inneren Wand 43 umgeben, die sich ausgehend von der Grundplatte 19 auf der Innenseite 22 ringförmig erhebt und am freien Ende des Tragteils 16 in die Umfangswand 20 übergeht. Zwischen dem der ersten Öffnung 17 abgewandten Halbkreisring des Lagerauges 33 und der Umfangswand 20 sind Versteifungsrippen 79 vorgesehen. In dem der ersten Öffnung 17 zugewandten Halbkreisring sind zwischen dem Lagerauge 33 und der inneren Wand 43 außer den den Halbkreisring begrenzenden Versteifungsrippen 79 keine Versteifungsstrukturen vorgesehen. Das Lagerauge 33 bildet mit den Versteifungsrippen 79 und der inneren Wand 43 eine Versteifungsstruktur 63. Die Versteifungsstruktur 63 umfasst außerdem eine äußere Wand 82, die in Fig. 5 gezeigt ist und sich von der Außenseite 21 der Grundplatte 19 in radialem Abstand zum Lagerauge 33 erhebt.

Die Umfangswand 20 besitzt einen ersten Abschnitt 23, der in der in Fig. 1 gezeigten Position des Trennschleifers 1 an der Oberseite des Auslegers 5 verläuft sowie einen zweiten Abschnitt 24, der in der in Fig. 1 gezeigten Position des Trennschleifers 1 an der Unterseite des Auslegers 5 verläuft. Wie Fig. 4 zeigt, erstreckt sich von der inneren Wand 43 zum ersten Abschnitt 23 der Umfangswand 20 eine Versteifungsstruktur 66, die als Versteifungsrippe ausgebildet ist. Eine ebenfalls als Versteifungsrippe ausgebildete Versteifungsstruktur 68 erstreckt sich zwischen der inneren Wand 43 und dem zweiten Abschnitt 24 der Umfangswand 20. An die Versteifungsstrukturen 66, 63 und 68 schließt ein Bereich 59 ohne Versteifungselemente an. Der Bereich 59 ohne Versteifungsstrukturen ist angrenzend zu der ringförmigen inneren Wand 43 angeordnet. Am zweiten Abschnitt 24 der Umfangswand 20 ist angrenzend an den Bereich 59 ohne Versteifungselemente eine Versteifungsstruktur 69 ausgebildet, die durch mehrere Versteifungsrippen 83 gebildet ist. Die Versteifungsrippen 83 bilden mit der Versteifungsrippe 68 eine fachwerkartige Versteifungsstruktur, die durch den Bereich 59 unterbrochen ist. Die Versteifungsrippen 83 der Versteifungsstruktur 69 sind nahe der Umfangswand 20 angeordnet, um ausreichend Bauraum für den Antriebsriemen 34 (Fig. 3) freizulassen. Die Höhe der Versteifungsrippen 83 entspricht der Höhe des angrenzenden Bereichs der Umfangswand 20. Die Versteifungsstruktur 69 besitzt Versteifungsrippen 84 mit verringerter Höhe, die zwischen dem Antriebsriemen 34 und der Grundplatte 19 verlaufen, wie die Figuren 3 und 4 zeigen.

In einem mittleren Bereich zwischen den Öffnungen 17 und 18 ist benachbart zum zweiten Abschnitt 24 der Umfangswand 20 eine Versteifungsstruktur 65 ausgebildet, die, wie auch Fig. 5 zeigt, als Versteifungstasche ausgebildet ist, die sich flächig von der Außenseite 21 der Grundplatte 19 erhebt. Die Versteifungstasche 65 nimmt eine Komponente 41 der Bremseinrichtung 36 auf, wie Fig. 3 zeigt. Die Komponente 41 bewegt sich zwischen der betätigten und der unbetätigten Position der Bremseinrichtung 36 innerhalb der Versteifungstasche 65. An der dem ersten Abschnitt 23 der Umfangswand 20 zugewandten Seite ist benachbart zur Versteifungstasche 65 ein Lagerauge 75 angeordnet, das zur Lagerung der Riemenscheibe 54 (Fig. 3) dient. Das Lagerauge 75 erhebt sich ebenfalls von der Außenseite 21, wie Fig. 5 zeigt.

Zwischen der Versteifungsstruktur 65 und der Begrenzungswand 44 an der ersten Öffnung 17 schließt an den zweiten Abschnitt 24 der Umfangswand 20 eine Versteifungsstruktur 70 an, die durch Versteifungsrippen 85 und Versteifungsaugen 86 gebildet ist. Die Versteifungsaugen 86 sind ringförmig ausgebildet.

Benachbart zum ersten Abschnitt 23 der Umfangswand 20 ist angrenzend an den Bereich 59 ohne Versteifungsstruktur eine Versteifungsstruktur 60 angeordnet, die durch eine Versteifungstasche 87 und einen in der Versteifungstasche 87 angeordneten Lagerdom 88 gebildet ist. Der Lagerdom 88 dient zur Lagerung einer Spannrolle 35 (Fig. 3). Wie Fig. 5 zeigt, erhebt sich die Versteifungsstruktur 60 von der Außenseite 21. Zwischen der an der Außenseite 21 angeordneten Versteifungstasche 87 der Versteifungsstruktur 60 und der an der Innenseite 22 am unteren Abschnitt 24 der Umfangswand 20 angeordneten Versteifungsstruktur 69 ist nur an der Außenseite eine weitere Versteifungsstruktur 64 angeordnet und nicht an der Innenseite 22. Im Innenraum 73 verläuft in diesem Bereich der zweite Antriebsriemen 34, wie Fig. 3 zeigt.

In einem näherungsweise mittleren Bereich zwischen den Öffnungen 17 und 18 ist benachbart zum ersten Abschnitt 23 eine Versteifungsstruktur 62 angeordnet, die Versteifungsrippen 89 umfasst, die sich von der Innenseite 22 in den Innenraum 73 (Fig. 2) erheben. Wie insbesondere Fig. 5 zeigt, umfasst die Versteifungsstruktur 62 auch eine Versteifungstasche 94, die sich von der Außenseite 21 erhebt, sowie ein in der Versteifungstasche 94 angeordnetes Versteifungsauge 95, das sich ebenfalls von der Außenseite 21 erhebt.

Zwischen der Versteifungsstruktur 62 und der Begrenzungswand 44 ist am ersten Abschnitt 23 der Umfangswand 20 eine Versteifungsstruktur 67 angeordnet, wie Fig. 4 zeigt. Die Versteifungsstruktur 67 umfasst Versteifungsrippen 96, Versteifungsaugen 97 sowie einen Lagerdom 98, der zur Lagerung der zweiten Spannrolle 35 (Fig. 3) dient. Die Versteifungsstruktur 67 ragt dabei nicht bis an die Begrenzungswand 44 an der ersten Öffnung 17, sondern besitzt zu dieser einen Abstand.

Zwischen den Versteifungsstrukturen 62 und 67 am ersten Abschnitt 23 der Umfangswand 20 und den Versteifungsstrukturen 65 und 70 am gegenüberliegenden zweiten Abschnitt 24 der Umfangswand 20 erstreckt sich ein Bereich, in dem im Wesentlichen keine Versteifungsstrukturen an der Innenseite 22 der Grundplatte 19 angeordnet sind. In diesem Bereich ist lediglich ein Lagerdom 105 für die Lagerung der Hebelanordnung 39 angeordnet. Der Lagerdom 105 ist an einer kegelstumpfförmigen Erhebung 107 der Grundplatte 19 angeordnet. Wie Fig. 5 zeigt, sind an der Erhebung 107 Versteifungsrippen 106 angeordnet, die sich innerhalb der Erhebung 107 an der Außenseite 21 zum Lagerdom 105 erstrecken.

Wie Fig. 5 zeigt, ist auf der Außenseite 21 der Grundplatte 19 zwischen der Versteifungsstruktur 65 und dem ersten Abschnitt 23 der Umfangswand 20 eine Versteifungsstruktur 61 angeordnet. Die Versteifungsstruktur 61 umfasst das Lagerauge 75, an dem die Riemenscheibe 54 (Fig. 3) gelagert ist. Um das Lagerauge 75 erstreckt sich eine zylindrische Versteifungsrippe 99, von der weitere Versteifungsrippen 100 in etwa radialer Richtung zum Lagerauge 75 nach außen ragen. Die Versteifungsstruktur 61 umfasst außerdem Versteifungsaugen 101, die an die Versteifungsrippen 100 angrenzen, sowie eine Versteifungsrippe 102, die sich etwa in Längsrichtung des Tragteils 16 dem Verlauf der Umfangswand 20 folgend in Richtung auf die erste Öffnung 17 erstreckt.

An die Versteifungsstruktur 60 schließt eine Versteifungsstruktur 64 an, die durch Versteifungsrippen 108, 109 gebildet ist. Die Versteifungsrippen 108 sind dabei vorteilhaft parallel zueinander angeordnet und von einer schräg verlaufenden Versteifungsrippe 109 verbunden, so dass sich eine dreieckige Anordnung ergibt. Die außenliegende der Versteifungsrippen 108 ist gegenüber der Versteifungsrippe 109 in Richtung auf den zweiten Abschnitt 24 (Fig. 4) der Umfangswand 20 verlängert. Die Versteifungsrippen 108 und 109 erheben sich von der Außenseite 21. Die Versteifungsstruktur 64 der Außenseite überlappt durch ihre verlängerte Versteifungsrippe 109 teilweise mit der an der Innenseite 22 am zweiten Abschnitt 24 angeordneten Versteifungsstruktur 69.

Wie Fig. 5 auch zeigt, ist im Bereich 59 ohne Versteifungsstrukturen auch an der Außenseite 21 keine Versteifungsstruktur angeordnet. An der Außenseite 21 verläuft der Bereich 59 ohne Versteifungselemente zwischen der äußeren Wand 82 der Versteifungsstruktur 63 und den Versteifungsstrukturen 60 und 64. Wie Fig. 7 zeigt, erstreckt sich der Bereich 59 ohne Versteifungselemente über einen Winkel γ an der Innenseite 22 um die innere Wand 43 herum zwischen den Versteifungsstrukturen 66 und 68, der vorteilhaft mindestens 60° beträgt. Im Ausführungsbeispiel beträgt der Winkel γ 70° bis 110°. Der Bereich 59 ohne Versteifungsstrukturen besitzt vorteilhaft eine Länge von mindestens 5 cm, insbesondere mindestens 8 cm, die insbesondere tangential zur Öffnung 18 gemessen ist. Die Breite des Bereichs 50 beträgt vorteilhaft über eine Länge von mindestens 4 cm an jeder Stelle mindestens 1 cm. Der Flächeninhalt des Bereichs 59 ohne Versteifungsstrukturen beträgt vorteilhaft mindestens 4 cm², insbesondere mindestens 8 cm².

Um eine gute Aufnahme der im Betrieb entstehenden Torsionskräfte zu erreichen, erheben sich die Versteifungsstrukturen 65, 62 und 67 aus der Grundplattenebene zu einer ersten Raumdiagonalen 25 und die Versteifungsstrukturen 60, 61, 70 zu einer zweiten Raumdiagonalen 26. Beide Raumdiagonalen 25, 26 schneiden das Tragteil 16 in dem sich zwischen den Öffnungen 17, 18 befindenden Mittelteil des Tragteils 16. Eine Raumdiagonale 25, 26 ist eine Gerade, die in jeder Blickrichtung parallel oder senkrecht zur ersten Achse 47 einen Winkel mit der Grundplattenebene einschließt. Die Raumdiagonalen 25 und 26 sind in den Fig. 4 und 5 schematisch eingezeichnet. Wie Fig. 6 zeigt, schneidet die Raumdiagonale 25 die Versteifungsstrukturen 65 und 62 an der Außenseite 21 und, wie Fig. 7 zeigt, die Versteifungsstruktur 67 an der Innenseite 22. Die Raumdiagonale 26 schneidet auf der Außenseite 21 die Versteifungsstruktur 60 und die Versteifungsstruktur 61 und verläuft an der Innenseite 22 durch die Versteifungsstruktur 70. Die Lage der Raumdiagonalen 25 und 26 wird im Folgenden anhand eines zweidimensionalen, kartesischen Koordinatensystems erläutert. Das kartesische Koordinatensystem mit einer x-Achse und einer y-Achse ist in einer Blickrichtung auf das Tragteil 16 in Richtung der ersten Achse 47, in der der Ausleger 5 vor dem Motorgehäuse 2 liegt (Fig. 1), definiert. Die erste Achse 47 und die zweite Achse 48 sind in der in den Fig. 6 und 7 gezeigten Seitenansicht von einer Verbindungslinie verbunden, die die x-Achse des Koordinatensystems bildet. Die x-Achse ist dabei von der ersten Achse 47 zur zweiten Achse 48 gerichtet. Die y-Achse des Koordinatensystems ist senkrecht zu der Verbindungslinie und der ersten Achse 47 angeordnet und verläuft mittig zwischen der ersten Achse 47 und der zweiten Achse 48. Die y-Achse schneidet die Verbindungslinie der Achsen 47 und 48 demnach mittig.

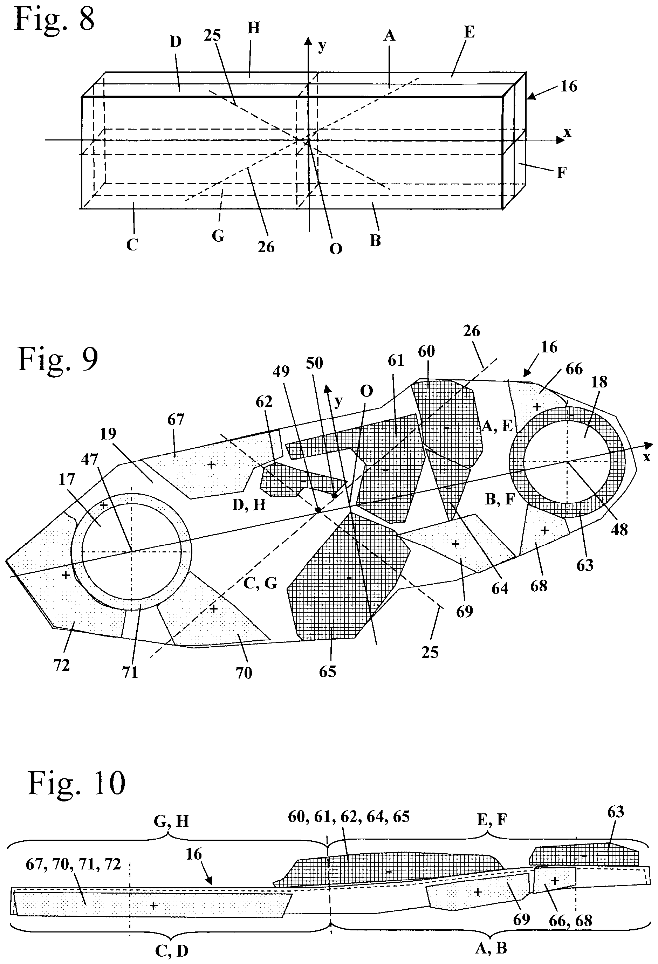

Das kartesische Koordinatensystem aus x-Achse und y-Achse besitzt vier Sektoren, die durch die positive x-Achse und die positive y-Achse, die positive x-Achse und die negative y-Achse, die negative y-Achse und die negative x-Achse sowie die positive y-Achse und die negative y-Achse definiert sind. Diesen vier Sektoren des Koordinatensystems ist jeweils ein Segment A, B, C, D an der Innenseite 22 des Tragteils 16 zugeordnet, wie Fig. 7 zeigt. Wie Fig. 6 zeigt, sind den Sektoren des Koordinatensystems an der Außenseite 21 die vier Segmente E, F, G, H zugeordnet. Die Anordnung der Sektoren des Koordinatensystems und der Segmente A - H ist in Fig. 8 schematisch gezeigt. Der Ursprung O des Koordinatensystems ist in der Grundplatte 19 zwischen der Innenseite 22 und der Außenseite 21 und mittig zwischen der ersten Achse 47 und der zweiten Achse 48 angeordnet. Wie Fig. 6 in Verbindung mit Fig. 7 und Fig. 8 zeigt, verläuft die erste Raumdiagonale 25 vom Segment F an der Außenseite 21 zum Segment D an der Innenseite 22. Die zweite Raumdiagonale 26 verläuft vom Segment E an der Außenseite 21zum Segment C an der Innenseite 22. Die erste Raumdiagonale 25 durchquert dabei auch einen Bereich des Segments G, und die zweite Raumdiagonale 26 durchquert das Segment H. Ein Teilbereich ist ein auf einer Seite der Grundplatte 19 angeordneter Bereich des Tragteils 16, der einer Versteifungsstruktur auf der anderen Seite der Grundplatte 19 gegenüberliegt und der selbst keine Versteifungsstruktur aufweist. Wie Fig. 7 zeigt, ist der Versteifungsstruktur 65 ein Teilbereich 90 auf der Innenseite 22 zugeordnet, da der Wandabschnitt nur eine sich von der Außenseite 21 erhebende Versteifungstasche aufweist. Eine Versteifungsstruktur, die sich an demselben Wandabschnitt von der Innenseite 22 erhebt, ist nicht vorgesehen. An der Innenseite 22 ist ein weiterer Teilbereich 91 vorgesehen, der keine Versteifungsstruktur an der Innenseite aufweist. An der Außenseite 21 sind in diesem Bereich die Versteifungsstrukturen 64 und 61 angeordnet. Wie Fig. 6 zeigt, ist der Versteifungsstruktur 60 ein Teilbereich 93 an der Innenseite 22 zugeordnet, der lediglich an der Außenseite 21 eine Versteifungsstruktur besitzt. Die andere Seite des Wandabschnitts, also der entsprechende Bereich der gegenüberliegenden Seite der Grundplatte, besitzt keine sich von der Innenseite 22 erhebende Versteifungsstruktur. Ein Teilbereich 92 ist auf der gegenüberliegenden Seite der Versteifungsstruktur 69 (Fig. 7) angeordnet. Auf einer Seite des Wandabschnitts ist der Teilbereich 92 und auf der anderen Seite die Versteifungsstruktur 69 angeordnet. An der Außenseite 21 ist im Teilbereich 92 keine Versteifungsstruktur angeordnet. Höchstens 30% der Fläche der Grundplatte 19 besitzen sowohl an der Außenseite 21 als auch an der Innenseite 22 im selben Wandabschnitt der Grundplatte 19 Versteifungsstrukturen.

Die Teilbereiche 90, 91, 92 und 93 besitzen jeweils einen Flächeninhalt von mindestens 2 cm². Die in x-Richtung und die in y-Richtung gemessene Erstreckung der Teilbereiche 90, 91, 92 und 93 beträgt jeweils mindestens 1 cm. Vorteilhaft besitzen alle Teilbereiche, die eine Versteifungsstruktur auf der gegenüberliegenden Seite der Grundplatte besitzen, einen Flächeninhalt von mindestens 2 cm² und eine Länge und Breite von jeweils mindestens 1 cm. Teilbereiche sind folglich Bereiche der Grundplatte, die nur an einer Seite der Grundplatte 19 Versteifungsstrukturen besitzen.

Die Teilbereiche, von denen die Teilbereiche 90, 91, 92 und 93 exemplarisch eingezeichnet sind, und Bereiche ohne jegliche Versteifungsstrukturen erstrecken sich über mindestens 70% der Fläche der Grundplatte 19. Als Wandabschnitt mit Versteifungsstrukturen werden Wandabschnitte der Grundplatte 19 betrachtet, die eine Versteifungsstruktur tragen oder zwischen zwei Elementen einer Versteifungsstruktur angeordnet sind, die einen Abstand von weniger als 4 cm zueinander besitzen. Bei einem Wandabschnitt, der Versteifungsrippen einer Versteifungsstruktur trägt, wenden demnach auch die zwischen den Versteifungsrippen liegenden Bereiche als Teil der Versteifungsstruktur betrachtet, wenn die Versteifungsrippen einen Abstand von weniger als 4 cm zueinander besitzen.

Wie Fig. 6 zeigt, schließt die Raumdiagonale 25 in einer Blickrichtung in Richtung der ersten Achse 47 mit der x-Achse einen Winkel α ein, der 20° bis 70° beträgt. Der Winkel α beträgt vorteilhaft 30° bis 60°. Ein positiver Winkel α ergibt sich, wenn der Winkel von der Raumdiagonalen 25 zur x-Achse im Uhrzeigersinn verläuft. Die Raumdiagonale 26 ist zur Gegenrichtung geneigt und schließt mit der x-Achse einen Winkel β Fig. 7 von -20° bis -70° ein. Ein negativer Winkel β ergibt sich, wenn der Winkel von der Raumdiagonalen 26 zur x-Achse entgegen dem Uhrzeigersinn verläuft. Die Raumdiagonale 26 erstreckt sich dabei überwiegend in dem Sektor mit positiven Werten der x-Achse und positiven Werten der y-Achse und dem Sektor mit negativen x-Werten und negativen y-Werten. Die erste Raumdiagonale 25 erstreckt sich überwiegend in dem Sektor mit positiven x-Werten und negativen y-Werten und dem Sektor mit negativen x-Werten und positiven y-Werten.

Die Raumdiagonalen 25 und 26 erstrecken sich in dem von der Umfangswand 20 umschlossenen Bereich im Wesentlichen zwischen den Öffnungen 17 und 18. In einer Blickrichtung in Richtung der ersten Achse 47, wie sie in Fig. 7 gezeigt ist, schneidet die erste Raumdiagonale 25 den ersten Abschnitt 23 der Umfangswand 20 in einer Schnittstelle 28 und den zweiten Abschnitt 24 der Umfangswand 20 in einer zweiten Schnittstelle 29. Die x-Koordinate der Schnittstellen 28 und 29 hat einen kleineren Betrag als die x-Koordinate der jeweiligen Öffnungen 17 und 18. Die Schnittstellen 28 und 29 liegen in Längsrichtung zwischen den Achsen 47 und 48 und zwischen den Öffnungen 17 und 18. Der Koordinatenursprung O liegt in Längsrichtung zwischen den Schnittstellen 28 und 29. Die Schnittstellen 28 und 29 liegen quer zur Längsrichtung betrachtet außerhalb der Öffnungen 17 und 18.

Die zweite Raumdiagonale 26 schneidet den zweiten Abschnitt 24 der Umfangswand 20 in einer ersten Schnittstelle 30 und den ersten Abschnitt 23 der Umfangswand 20 in einer zweiten Schnittstelle 31. Die zweite Schnittstelle 31 liegt in x-Richtung zwischen den Öffnungen 17 und 18. Die erste Schnittstelle 30 liegt in x-Richtung zwischen den Achsen 47 und 48. Die erste Schnittstelle 30 liegt allerdings nicht näher am Ursprung O des Koordinatensystems als die erste Öffnung 17. Die erste Schnittstelle 30 besitzt zur Öffnung 17 einen Abstand d, der kleiner als 10 cm ist. Vorteilhaft ist der Abstand d kleiner als 5 cm. Die erste Schnittstelle 28 der ersten Raumdiagonale 25 besitzt zur Öffnung 17 einen Abstand c, der vorteilhaft ebenfalls kleiner als 10 cm, insbesondere kleiner als 8 cm ist.

Die erste Öffnung 17 besitzt einen Durchmesser e und die zweite Öffnung 18 besitzt einen Durchmesser f, wie Fig. 6 zeigt. Der Durchmesser f ist deutlich kleiner als der Durchmesser e. Der in Fig. 7 gezeigte Abstand c der ersten Schnittstelle 28 zur ersten Öffnung 17 ist kleiner als der Durchmesser e der Öffnung 17 und vorteilhaft auch kleiner als der Durchmesser f der zweiten Öffnung 18.

Die Fig. 9 und 10 zeigen die Anordnung der Versteifungsstrukturen 60 bis 72 schematisch. Dabei ist jeweils die Nettohöhe von übereinander liegenden Versteifungsstrukturen berücksichtigt. Die Nettohöhe ist die Summe der parallel zur ersten Achse 47 gemessenen Höhen von Teilversteifungsstrukturen auf gegenüberliegenden Seiten desselben Wandabschnitts der Grundplatte. Teilversteifungsstrukturen, die sich von der Außenseite erheben, werden dabei mit negativem Vorzeichen berücksichtigt und Teilversteifungsstrukturen, die sich von der Innenseite erheben, mit positivem Vorzeichen. Die Nettohöhe eines Versteifungselements, das durch Versteifungsstrukturen gebildet wird, die sich zu derselben Raumdiagonale erheben, wechselt entlang der Raumdiagonalen ihr Vorzeichen. Im Bereich der negativen x-Achse, der vorteilhaft dem Antriebsmotor 11 (Fig. 2) zugewandt ist, sind überwiegend erste Versteifungsstrukturen angeordnet, also Versteifungsstrukturen, die sich von der Innenseite 22 erheben. Im Bereich der positiven x-Achse, der vorteilhaft dem Werkzeug zugewandt ist, sind überwiegend zweite Versteifungsstrukturen angeordnet, also Versteifungsstrukturen, die sich von der Außenseite 21 erheben.

Die Versteifungsstrukturen 67, 62 und 65 bilden ein Versteifungselement 81, das in den Fig. 11 und 12 gezeigt ist. Die Figuren 11 und 12 zeigen einen Schnitt entlang der ersten Raumdiagonalen 25 und senkrecht zur xy-Ebene. Die Raumdiagonale 25 schneidet dabei die Versteifungsstruktur 65, die Grundplatte 19 und die Versteifungsstruktur 67 sowie, benachbart zur Versteifungsstruktur 67, den ersten Abschnitt 23 der Umfangwand 20. Das Versteifungselement 81 erstreckt sich vom ersten Abschnitt 23 zum zweiten Abschnitt 24 der Umfangswand 20. In Fig. 12 sind schematisch auch die Sektoren F, G und D eingezeichnet, durch die der gezeigte Schnitt und die Raumdiagonale 25 verlaufen. Das Versteifungselement 81 besitzt zumindest in einem Punkt 49 eine Nettohöhe von Null. Im Ausführungsbeispiel ist der Punkt 49 der Schnittpunkt mit der x-Achse. Der Punkt 49 kann zur x-Achse und zur y-Achse jedoch auch beabstandet sein. Im Ausführungsbeispiel besitzt das Versteifungselement 81 über einen vergleichsweise breiten mittleren Bereich 103 eine Nettohöhe von Null. Im Ausführungsbeispiel ist die Nettohöhe der Versteifungsstrukturen beidseitig des Bereichs 103 negativ. Sowohl die Versteifungsstruktur 65 als auch die Versteifungsstruktur 62 erstecken sich überwiegend beidseitig des Schnittpunktes der Raumdiagonalen 25 mit einer Grundplattenebene 110 von der Außenseite 21 (Fig. 11), jedoch unterschiedlich stark.

Die Beträge der Nettohöhen der Versteifungsstrukturen nehmen vorteilhaft entlang der Raumdiagonalen 25, 26 in Richtung auf die Abschnitte 23, 24 der Umfangswand 20 zu und in Richtung auf den Schnittpunkt der Raumdiagonalen 25, 26 mit der Grundplattenebene 110 ab.

Die Versteifungsstruktur 62 ist in einem Wandabschnitt 55 angeordnet, in dem sowohl Teilversteifungsstrukturen 62a vorgesehen sind, die sich von der Außenseite 21 erheben als auch Teilversteifungsstrukturen 62b, die sich von der Innenseite 22 erheben. Im Wandabschnitt 55 überlappen sich damit Teilversteifungsstrukturen 62a, 62b von gegenüberliegenden Seiten 21, 22 der Grundplatte 19. Die Teilversteifungsstrukturen 62a und 62b bilden gemeinsam die Versteifungsstruktur 62. Die Teilversteifungsstrukturen 62a besitzen eine Höhe h₁, die parallel zur ersten Achse 47 (Fig. 7) gemessen ist. Die Teilversteifungsstrukturen 62b besitzen eine Höhe h₂, die etwas geringer als die Höhe h₁ ist. Dadurch ergibt sich eine Nettohöhe n₂ als Summe der Höhen h₁ und h₂, wobei die Höhe h₁ mit negativem und die Höhe h₂ mit positivem Vorzeichen berücksichtigt wird. Die Nettohöhe n₂ ist dadurch negativ. Alle Höhen und Nettohöhen sind zu einer Grundplattenebene 110 gemessen. Die Grundplattenebene 110 ist die Mittelebene der Grundplatte 19 und verläuft mittig zwischen Außenseite 21 und Innenseite 22. Bereiche der Tragplatte 16, die gegenüber der Trennscheibe 6 oder einer Lotebene zur ersten Achse 47 um mehr als 30° geneigt sind oder eine Wandstärke von mehr als 1 cm aufweisen, stellen keinen Teil der Grundplatte 19 dar. Versteifungsstrukturen schließen vorteilhaft linienförmig an die Innenseite 22 oder die Außenseite 21 der Grundplatte 19 an. Die Grundplatte 19 weist im Bereich der Versteifungstaschen eine Unterbrechung auf, so dass die Versteifungstaschen nur an ihrem Umfang die Grundplatte 19 kontaktieren. Innerhalb der Unterbrechung spiegelt die Grundplattenebene 110 den Verlauf der Grundplatte 19 wieder, den sie hätte, wenn sie in diesem Bereich nicht unterbrochen wäre (siehe beispielweise Fig. 12).

Die Versteifungsstruktur 65 besitzt eine negative Nettohöhe n₁, die der parallel zur ersten Achse 47 gemessenen Höhe der Versteifungsstruktur 65 mit negativem Vorzeichen entspricht. Die Versteifungsstruktur 67 besitzt eine positive Nettohöhe n₃, die ebenfalls der tatsächlichen, bis zur Grundplattenebene 110 gemessenen Höhe der Versteifungsstruktur 67 entspricht. Die Versteifungsstruktur 62 besitzt eine negative Nettohöhe n₂, die dem Mittelwert der Höhen der Teilversteifungsstrukturen 62a und 62b entspricht.

Der Punkt 49, an dem die Nettohöhe null beträgt, ist vorteilhaft nahe am Ursprung O des Koordinatensystems angeordnet, wie die Fig. 7 und 9 zeigen. Wie Fig. 7 zeigt, besitzt der Punkt 49 zum Ursprung O einen Abstand a, der vorteilhaft weniger als 2 cm beträgt. Die Grundplatte 19 weist einen zentral in der Grundplatte 19 zwischen der ersten Öffnung 17 und zweiten Öffnung 18 und zwischen dem ersten Abschnitt 23 und dem zweiten Abschnitt 24 der Umfangswand 20 liegenden Mittelteil auf, der weder auf der Innenseite 22 noch auf der Außenseite 21 eine Versteifungsstruktur trägt.

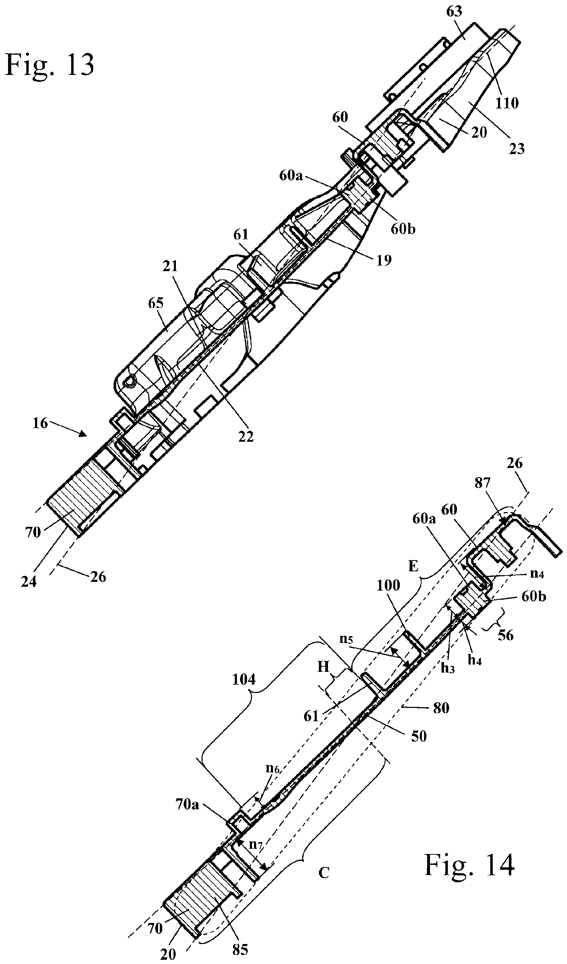

Zur zweiten Raumdiagonale 26 erheben sich die Versteifungsstrukturen 60, 61 und 70, wie Fig. 9 zeigt. Die Fig. 13 und 14 zeigen einen Schnitt entlang der Raumdiagonalen 26 und senkrecht zur xy-Ebene. Wie die Fig. 13 und 14 zeigen, bilden die Versteifungsstrukturen 60, 61 und 70 ein Versteifungselement 80, das sich räumlich diagonal durch das Tragteil 16 erstreckt. Das Versteifungselement 80 erstreckt sich dabei vom ersten Abschnitt 23 der Umfangswand 20 und der Außenseite 21 zum zweiten Abschnitt 24 der Umfangswand 20 und der Innenseite 22 und verbindet die beiden Abschnitte 23, 24 räumlich diagonal miteinander. Wie Fig. 14 zeigt, besitzt die Versteifungsstruktur 60 eine Nettohöhe n₄, die aufgrund der Anordnung der Versteifungsstruktur 60 auf der Außenseite negativ ist. In einem Wandabschnitt 56 sind Teilversteifungsstrukturen 60a an der Außenseite 21 und Teilversteifungsstrukturen 60b an der Innenseite 22 (Fig. 13) angeordnet, die Teile der Versteifungsstruktur 60 bilden. Die Teilversteifungsstrukturen 60a und 60b überlappen sich im Wandabschnitt 56. Die Teilversteifungsstruktur 60a besitzt eine Höhe h₃, die mit negativem Vorzeichen berücksichtigt wird und senkrecht zur xy-Ebene bis zur Grundplattenebene 110 gemessen ist. Die Teilversteifungsstruktur 60b besitzt eine Höhe h₄, die mit positivem Vorzeichen berücksichtigt wird. Die Höhe h₃ besitzt einen geringfügig größeren Betrag als die Höhe h₄, so dass sich insgesamt eine negative Nettohöhe in diesem Bereich ergibt. Die Versteifungsstrukturen 61 besitzen eine Nettohöhe n₅, die ebenfalls negativ ist. Die Versteifungsstruktur 70 umfasst eine Teilversteifungsstruktur 70a auf der Außenseite 21 mit einer Nettohöhe n₆ sowie eine in einem angrenzenden Wandabschnitt angeordnete Versteifungsstruktur 70 mit einer Nettohöhe n₇. Im Mittelteil der Grundplatte 19 beträgt die Nettohöhe zumindest an einer Stelle 50 zwischen zwei zu dem Versteifungselement 80 gehörenden Versteifungsstrukturen 61, 70a null. Die Fig. 7 und 9 zeigen die Lage der Stelle 50. Die Stelle 50 besitzt zum Ursprung O des Koordinatensystems einen Abstand b, der sehr gering ist. Der Abstand b beträgt vorteilhaft weniger als 2 cm. Im Mittelteil der Grundplatte 19 beträgt die Nettohöhe vorteilhaft in einem Bereich 104, der sich zwischen zwei zu dem Versteifungselement 80 gehörenden Versteifungsstrukturen 61 und 70 erstreckt, null.

Wie Fig. 14 zeigt, schneidet die Raumdiagonale 26 die Versteifungsstruktur 60 benachbart zur Umfangswand 20. Die Raumdiagonale 26 schneidet den ersten Abschnitt 23 der Umfangswand 20 an der Versteifungsstruktur 60 und den zweiten Abschnitt 24 an der Versteifungsstruktur 70.

Wie Fig. 12 und 14 auch zeigen, nimmt die Nettohöhe der entlang einer Raumdiagonalen 25, 26 aufeinander folgenden Versteifungsstrukturen 67 und 65 bzw. 70 und 60 in ihrem Betrag ab, bis sich schließlich das Vorzeichen umkehrt. Die Nettohöhen n₃ und n₁ bzw. n₇ und n₄ der sich zu einer gemeinsamen Raumdiagonalen 25 oder 26 erhebenden, nahe der Umfangswand 20 angeordneten Versteifungsstrukturen 67 und 65 bzw. 70 und 60 ist jeweils größer als die Nettohöhe n₂ bzw. n₅ einer sich zu derselben Raumdiagonalen 25 oder 26 nahe der Verbindungslinie erhebenden Versteifungsstruktur 62 bzw. 61. Die Nettohöhe der sich zu einer Raumdiagonalen 25, 26 nahe des einen Abschnitts 24 der Umfangswand 20 erhebenden Versteifungsstruktur 67 oder 70 hat ein entgegengesetztes Vorzeichen zu der Nettohöhe einer sich zu derselben Raumdiagonalen 25 oder 26 nahe des anderen Abschnitts 24 der Umfangswand 20 erhebenden Versteifungsstruktur 65 oder 60.

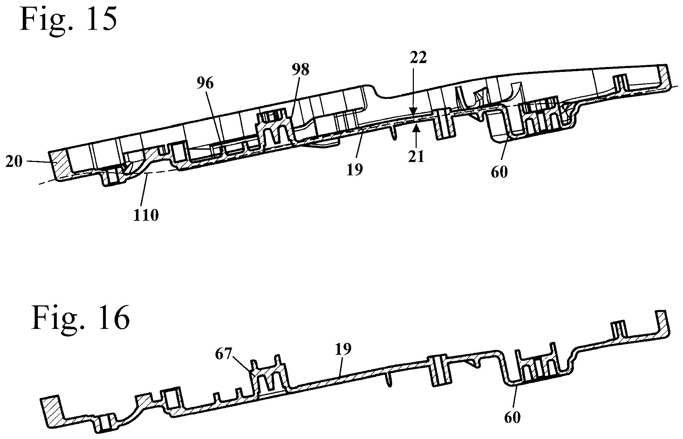

Die Fig. 15 und 16 zeigen einen außermittigen Längsschnitt durch das Tragteil 16. An dem motornahen Endbereich des Tragteils 16 besitzt die Grundplatte 19 an ihrer Außenseite 21 einen im Wesentlichen ebenen Anschlussbereich, mit dem das Tragteil 16 am Motorgehäuse 2 (Fig.1) anliegt. In dem werkzeugnahen Endbereich des Tragteils 16 ist die Grundplatte 19 leicht zur Ebene der Trennscheibe 6 (Fig. 1) hin gebogen. Die Außenseite 21 des Tragteils 16 besitzt am werkzeugnahen Ende einen geringeren Abstand zur Ebene der Trennscheibe 6 als am motornahen Ende.

Als Versteifungsrippen werden Versteifungsstrukturen verstanden, die sich linienförmig aus der Grundplatte 19 erheben, während Versteifungstaschen sich flächig aus der Grundplatte 19 erheben. Vorteilhaft erheben sich mehr als die Hälfte der Versteifungstaschen von der Außenseite 21. Im Ausführungsbeispiel erheben sich alle Versteifungstaschen 65, 87, 94 von der Außenseite 21. Die Versteifungselemente 80 und 81 umfassen als Versteifungsstrukturen jeweils mindestens eine Versteifungstasche und eine Versteifungsrippe, wobei sich die Versteifungsstrukturen eines Versteifungselementes von gegenüberliegenden Seiten der Grundplatte 19 bzw. der Grundplattenebene 110 erheben.

## Patentansprüche

1. Handgeführtes Arbeitsgerät mit einer Motoreinheit (51), mit einer Werkzeugeinheit (52) und mit einem die Motoreinheit (51) und die Werkzeugeinheit (52) verbindenden Ausleger (5), wobei die Werkzeugeinheit (52) eine Trennscheibe (6) und eine Schutzhaube (7) beinhaltet, wobei der Ausleger (5) ein Tragteil (16) besitzt, wobei das Tragteil (16) eine Grundplatte (19) mit einer Innenseite (22) und einer Außenseite (21) besitzt, wobei die Außenseite (21) der Motoreinheit (51) zugewandt liegt, wobei die Grundplatte (19) an ihrem Umfang von einer umlaufenden Umfangswand (20) begrenzt ist, wobei die Umfangswand (20) sich über mindestens 50% ihrer Länge ausschließlich von der Innenseite (22) der Grundplatte (19) erhebt, wobei quer zur Grundplatte (19) eine um eine erste Achse (47) rotierend angetriebene Antriebswelle (45) verläuft, und wobei parallel zur Antriebswelle (45) eine um eine zweite Achse (48) drehbar gelagerte Abtriebswelle (46) verläuft, wobei das Tragteil (16) ein Koordinatensystem mit einer x-Achse und einer y-Achse besitzt, wobei in einer Blickrichtung auf das Tragteil (16) in Richtung der ersten Achse (47) eine Verbindungslinie der ersten Achse (47) mit der zweiten Achse (48) die x-Achse des Koordinatensystems bildet, und wobei die y-Achse senkrecht zu der Verbindungslinie und zu der ersten Achse (47) angeordnet ist und mittig zwischen der ersten Achse (47) und der zweiten Achse (48) verläuft, wobei in jedem der vier Sektoren des Koordinatensystems an der Innenseite (22) und in jedem der vier Sektoren des Koordinatensystems an der Außenseite (21) jeweils ein Segment (A, B, C, D, E, F, G, H) des Tragteils (16) angeordnet ist, wobei das Tragteil (16) mindestens eine Raumdiagonale (25, 26) besitzt, die durch ein Segment (E, F) auf der Außenseite (21) und ein bezüglich des Ursprungs (O) des Koordinatensystems gegenüberliegendes Segment (C, D) auf der Innenseite (22) verläuft, wobei der Ursprung (O) des Koordinatensystems in der Grundplatte (19) zwischen der Innenseite (22) und der Außenseite (21) und mittig zwischen der ersten Achse (47) und der zweiten Achse (48) angeordnet ist, wobei sich von der Innenseite (22) der Grundplatte (19) mindestens eine erste Versteifungsstruktur (67, 70) zu der Raumdiagonalen (25, 26) hin erhebt,
**dadurch gekennzeichnet, dass** sich von der Außenseite (21) der Grundplatte (19) mindestens eine zweite Versteifungsstruktur (60, 61, 62, 65) zu derselben Raumdiagonalen (25, 26) hin erhebt, so dass die erste Versteifungsstruktur (67, 70) und die zweite Versteifungsstruktur (60, 61, 62, 65) ein räumlich diagonal verlaufendes Versteifungselement (80, 81) bilden.

2. Arbeitsgerät nach Anspruch 1,
**dadurch gekennzeichnet, dass** höchstens 30% der Fläche der Grundplatte (19) sowohl an der Außenseite (21) als auch an der Innenseite (22) im selben Wandabschnitt (55, 56) der Grundplatte (19) Versteifungsstrukturen (60, 61, 62, 63, 64, 67, 69) besitzen.

3. Arbeitsgerät nach Anspruch 1 oder 2,
**dadurch gekennzeichnet, dass** die erste Versteifungsstruktur (67, 70) und die zweite Versteifungsstruktur (60, 61, 62, 65) jeweils mindestens einen im selben Wandabschnitt auf der gegenüberliegenden Seite der Grundplatte (19) angeordneten Teilbereich (90, 91, 92, 93) aufweisen, der keine Versteifungsstruktur besitzt und der als zusammenhängender Bereich mit einem Flächeninhalt von mindestens 2 cm² ausgebildet ist.

4. Arbeitsgerät nach einem der Ansprüche 1 bis 3,
**dadurch gekennzeichnet, dass** die Versteifungsstrukturen (60, 61, 62, 65, 67, 70) eine Nettohöhe (n₁, n₂, n₃, n₄, n₅, n₆, n₇, n₈, n₉) besitzen, wobei die Nettohöhe (n₁, n₂, n₃, n₄, n₅, n₆, n₇, n₈, n₉) die Summe der parallel zur ersten Achse (47) gemessenen Höhen (h₁, h₂, h₃, h₄) der Teilversteifungsstrukturen (60a, 60b, 62a, 62b) auf gegenüberliegenden Seiten des selben Wandabschnitts der Grundplatte (19) ist, wobei Teilversteifungsstrukturen (60a, 62a), die sich auf der Außenseite (21) erheben, mit negativem Vorzeichen und Teilversteifungsstrukturen (60b, 62b), die sich auf der Innenseite (22) erheben, mit positivem Vorzeichen berücksichtigt werden, wobei die Nettohöhe (n₁, n₂, n₃, n₄, n₅, n₆, n₇) von Versteifungsstrukturen (60, 61, 62, 65, 67, 70), die sich zu der selben Raumdiagonalen (25, 26) erheben, entlang der Raumdiagonale ihr Vorzeichen wechselt und in mindestens einem Punkt (49, 50), der einen Abstand (a, b) von höchstens 2 cm zum Ursprung (O) des Koordinatensystems besitzt, null beträgt.

5. Arbeitsgerät nach einem der Ansprüche 1 bis 4,
**dadurch gekennzeichnet, dass** eine erste Raumdiagonale (25) in der Blickrichtung in Richtung der ersten Achse (47) mit der x-Achse einen Winkel (α) von 20° bis 70° einschließt.

6. Arbeitsgerät nach einem der Ansprüche 1 bis 5,
**dadurch gekennzeichnet, dass** eine zweite Raumdiagonale (26) in der Blickrichtung in Richtung der ersten Achse (47) mit der x-Achse einen Winkel (β) von -20° bis -70° einschließt.

7. Arbeitsgerät nach einem der Ansprüche 1 bis 6,
**dadurch gekennzeichnet, dass** die Grundplatte (19) eine erste Öffnung (17) besitzt, durch die die Antriebswelle (45) verläuft, dass die Grundplatte (19) eine zweite Öffnung (18) besitzt, durch die die Abtriebswelle (46) verläuft, und dass die Umfangswand (20) einen ersten Abschnitt (23) und einen zweiten Abschnitt (24) besitzt, die bezüglich der Verbindungslinie der ersten Achse (47) mit der zweiten Achse (48) an gegenüberliegenden Rändern der Grundplatte (19) in Längsrichtung des Auslegers (5) verlaufen.

8. Arbeitsgerät nach Anspruch 7,
**dadurch gekennzeichnet, dass** sich mindestens ein Versteifungselement (80, 81) in einem Bereich zwischen der ersten Achse (47) und der zweiten Achse (48) von einem der Abschnitte (23, 24) der Umfangswand (20) zu dem anderen der Abschnitte (23, 24) der Umfangswand (20) und von der einen Seite der Grundplatte (19) zu der anderen Seite der Grundplatte (19) erstreckt, wobei die Außenseite (21) und die Innenseite (22) die zwei Seiten der Grundplatte (19) sind.

9. Arbeitsgerät nach Anspruch 7 oder 8,
**dadurch gekennzeichnet, dass** die Grundplatte (19) benachbart zur zweiten Öffnung (18) einen Bereich (59) ohne Versteifungsstrukturen besitzt, der sich vom ersten Abschnitt (23) der Umfangswand (20) zu dem zweiten Abschnitt (24) der Umfangswand (20) erstreckt.

10. Arbeitsgerät nach Anspruch 9,
**dadurch gekennzeichnet, dass** die Raumdiagonale (25, 26) in der Blickrichtung in Richtung der ersten Achse (47) einen Abschnitt (23, 24) der Umfangswand (20) in einer ersten Schnittstelle (28, 30) und den anderen Abschnitt (24, 23) der Umfangswand (20) in einer zweiten Schnittstelle (29, 31) schneidet, wobei die erste Schnittstelle (28, 30) zur ersten Öffnung (17) einen Abstand (c, d) von weniger als dem Durchmesser (e, f) von mindestens einer der Öffnungen (17, 18) besitzt und wobei der Bereich (59) ohne Versteifungsstrukturen zwischen der zweiten Schnittstelle (29, 31) und der zweiten Öffnung (18) verläuft.

11. Arbeitsgerät nach Anspruch 10,
**dadurch gekennzeichnet, dass** die zweite Öffnung (18) an einem Lagerauge (33) ausgebildet ist, das von einer ringförmigen Wand (43) umgeben ist.

12. Arbeitsgerät nach Anspruch 11,
**dadurch gekennzeichnet, dass** an der ringförmigen Wand (43) eine Versteifungsstruktur (64) angeordnet ist, die sich zu der Umfangswand (20) erstreckt, wobei an die Versteifungsstruktur (64) der Bereich (59) ohne Versteifungsstrukturen anschließt.

13. Arbeitsgerät nach einem der Ansprüche 7 bis 12,
**dadurch gekennzeichnet, dass** mindestens eine Versteifungsstruktur (61, 62, 63, 64, 66, 67, 68, 69, 70, 72) eine sich aus der Grundplatte (19) linienförmig erhebende Versteifungsrippe (77, 79, 83, 84, 85, 89, 96, 99, 100, 102) umfasst.

14. Arbeitsgerät nach Anspruch 13,
**dadurch gekennzeichnet, dass** mindestens eine Versteifungsstruktur (60, 62, 65) eine sich aus der Grundplatte (19) flächig erhebende Versteifungstasche (87, 94) umfasst.

15. Arbeitsgerät nach Anspruch 14,
**dadurch gekennzeichnet, dass** sich mindestens die Hälfte der Versteifungstaschen (87, 94) von der Außenseite (21) erhebt.

16. Arbeitsgerät nach Anspruch 14 oder 15,
**dadurch gekennzeichnet, dass** mindestens ein Versteifungselement (80) mindestens eine Versteifungsrippe (85, 100) und mindestens eine Versteifungstasche (87) umfasst, wobei sich mindestens eine der Versteifungsstrukturen (70) von Versteifungsrippe (85, 100) und Versteifungstasche (87) von der Innenseite (22) der Grundplatte (19) und mindestens eine andere der Versteifungsstrukturen (60) von Versteifungsrippe (85, 100) und Versteifungstasche (87) von der Außenseite (21) der Grundplatte (19) erhebt.

17. Arbeitsgerät nach einem der Ansprüche 13 bis 16,
**dadurch gekennzeichnet, dass** die erste Öffnung (17) von einer Wand (44) begrenzt ist und an der zweiten Öffnung (18) ein Lagerauge (33) angeordnet ist, wobei sich die Wand (44) überwiegend auf der Innenseite (22) erhebt und wobei sich das Lagerauge (33) von Innenseite (22) und von der Außenseite (21) der Grundplatte (19) erhebt.

## Claims

1. Hand-held implement having a motor unit (51), having a tool unit (52) and having an extension arm (5), which connects the motor unit (51) and the tool unit (52), wherein the tool unit (52) contains a cutting disc (6) and a safety hood (7), wherein the extension arm (5) has a supporting part (16), wherein the supporting part (16) has a base plate (19) with an inner side (22) and an outer side (21), wherein the outer side (21) is directed towards the motor unit (51), wherein the base plate (19) is delimited along its circumference by a surrounding circumferential wall (20), wherein the circumferential wall (20), over at least 50% of its length, rises up exclusively from the inner side (22) of the base plate (19), wherein a drive shaft (45), which is driven in rotation about a first axis (47), runs transversely in relation to the base plate (19), and wherein an output shaft (46), which is mounted such that it can be rotated about a second axis (48), runs parallel to the drive shaft (45), wherein the supporting part (16) has a coordinate system with a x axis and a y axis, wherein, when the supporting part (16) is viewed in the direction of the first axis (47), a connecting line between the first axis (47) and the second axis (48) forms the x axis of the coordinate system, and wherein the y axis is arranged perpendicularly in relation to connecting line and in relation to the first axis (47) and runs centrally between the first axis (47) and the second axis (48), wherein a respective segment (A, B, C, D, E, F, G, H) of the supporting part (16) is arranged in each of the four sectors of the coordinate system on the inner side (22) and in each of the four sectors of the coordinate system on the outer side (21), wherein the supporting part (16) has at least one space diagonal (25, 26), which runs through a segment (E, F) from the outer side (21) and a segment (C, D) on the inner side (22), the latter segment being located opposite the former segment in relation to the origin (O) of the coordinate system, wherein the origin (O) of the coordinate system is arranged in the base plate (19) between the inner side (22) and the outer side (21) and centrally between the first axis (47) and the second axis (48), wherein at least one first stiffening structure (67, 70) rises up from the inner side (22) of the base plate (19) in the direction of the space diagonals (25, 26), **characterized in that** at least one second stiffening structure (60, 61, 62, 65) rises up from the outer side (21) of the base plate (19) in the direction of the same space diagonals (25, 26), and therefore the first stiffening structure (67, 70) and the second stiffening structure (60, 61, 62, 65) form a stiffening element (80, 81) which runs diagonally in space.

2. Implement according to Claim 1,
**characterized in that** at most 30% of the surface area of the base plate (19) has stiffening structures (60, 61, 62, 63, 64, 67, 69) both on the outer side (21) and on the inner side (22), in the same wall portion (55, 56) of the base plate (19).

3. Implement according to Claim 1 or 2,
**characterized in that** the first stiffening structure (67, 70) and the second stiffening structure (60, 61, 62, 65) each have at least one sub-region (90, 91, 92, 93) which is arranged on the same wall portion on the opposite side of the base plate (19), has no stiffening structure and is designed in the form of an interconnected region with a surface area of at least 2 cm².

4. Implement according to one of Claims 1 to 3,
**characterized in that** the stiffening structures (60, 61, 62, 65, 67, 70) have a net height (n₁, n₂, n₃, n₄, n₅, n₆, n₇, n₈, n₉), wherein the net height (n₁, n₂, n₃, n₄, n₅, n₆, n₇, n₈, n₉) is the sum of the heights (h₁, h₂, h₃, h₄,) of the stiffening sub-structures (60a, 60b, 62a, 62b) on opposite sides of the same wall portion of the base plate (19), said heights being measured parallel to the first axis (47), wherein stiffening sub-structures (60a, 62a) which rise up on the outer side (21) are considered to have a negative sign and stiffening sub-structures (60b, 62b) which rise up on the inner side (22) are considered to have a positive sign, wherein the net height (n₁, n₂, n₃, n₄, n₅, n₆, n₇) of stiffening structures (60, 61, 62, 65, 67, 70) which rise up in the direction of the same space diagonals (25, 26) changes its sign along the space diagonal and is zero at at least one point (49, 50), which is at a distance (a, b) of not more 2 cm from the origin (O) of the coordinate system.

5. Implement according to one of Claims 1 to 4,
**characterized in that**, when viewed in the direction of the first axis (47), a first space diagonal (25) encloses an angle (α) of 20° to 70° with the x axis.

6. Implement according to one of Claims 1 to 5,
**characterized in that**, when viewed in the direction of the first axis (47), a second space diagonal (26) encloses an angle (β) of -20° to -70° with the x axis.

7. Implement according to one of Claims 1 to 6,
**characterized in that** the base plate (19) has a first opening (17), through which the drive shaft (45) runs, **in that** the base plate (19) has a second opening (18), through which the output shaft (46) runs, and **in that** the circumferential wall (20) has a first portion (23) and a second portion (24), which, in relation to the connecting line between the first axis (47) and the second axis (48), run on opposite edges of the base plate (19), in the longitudinal direction of the extension arm (5).

8. Implement according to Claim 7,
**characterized in that** at least one stiffening element (80, 81) extends, in a region between the first axis (47) and the second axis (48), from one of the portions (23, 24) of the circumferential wall (20) to the other of the portions (23, 24) of the circumferential wall (20) and from the one side of the base plate (19) to the other side of the base plate (19), wherein the outer side (21) and the inner side (22) are the two sides of the base plate (19).

9. Implement according to Claim 7 or 8,
**characterized in that**, adjacent to the second opening (18), the base plate (19) has a region (59) without stiffening structures, this region extending from the first portion (23) of the circumferential wall (20) to the second portion (24) of the circumferential wall (20).

10. Implement according to Claim 9,
**characterized in that**, when viewed in the direction of the first axis (47), the space diagonal (25, 26) intersects one portion (23, 24) of the circumferential wall (20) at a first point of intersection (28, 30) and the other portion (24, 23) of the circumferential wall (20) at a second point of intersection (29, 31), wherein the first point of intersection (28, 30) is spaced apart from the first opening (17) by a distance (c, d) of less than the diameter (e, f) of at least one of the openings (17, 18), and wherein the region (59) without stiffening structures runs between the second point of intersection (29, 31) and the second opening (18).

11. Implement according to Claim 10,
**characterized in that** the second opening (18) is formed on a bearing eye (33), which is enclosed by an annular wall (43).

12. Implement according to Claim 11,
**characterized in that** a stiffening structure (64), which extends to the circumferential wall (20), is arranged on the annular wall (43), wherein the stiffening structure (64) is adjoined by the region (59) without stiffening structures.

13. Implement according to one of Claims 7 to 12,
**characterized in that** at least one stiffening structure (61, 62, 63, 64, 66, 67, 68, 69, 70, 72) comprises a stiffening rib (77, 79, 83, 84, 85, 89, 96, 99, 100, 102), which rises up in linear form from the base plate (19).

14. Implement according to Claim 13,
**characterized in that** at least one stiffening structure (60, 62, 65) comprises a stiffening pocket (87, 94), which rises up in planar form from the base plate (19).

15. Implement according to Claim 14,
**characterized in that** at least half of the stiffening pockets (87, 94) rises up from the outer side (21).

16. Implement according to Claim 14 or 15,
**characterized in that** at least one stiffening element (80) comprises at least one stiffening rib (85, 100) and at least one stiffening pocket (87), wherein at least one of the stiffening structures (70) comprising a stiffening rib (85, 100) and a stiffening pocket (87) rises up from the inner side (22) of the base plate (19) and at least one other of the stiffening structures (60) comprising a stiffening rib (85, 100) and a stiffening pocket (87) rises up from the outer side (21) of the base plate (19).

17. Implement according to one of Claims 13 to 16,
**characterized in that** the first opening (17) is delimited by a wall (44) and a bearing eye (33) is arranged on the second opening (18), wherein the wall (44) rises up predominantly on the inner side (22), and wherein the bearing eye (33) rises up from the inner side (22) and from the outer side (21) of the base plate (19).

## Revendications

1. Appareil de travail tenu à la main doté d'une unité de moteur (51), doté d'une unité d'outil (52) et doté d'un bras en porte-à-faux (5) reliant l'unité de moteur (51) et l'unité d'outil (52), l'unité d'outil (52) comportant une meule de tronçonnage (6) et un capot de protection (7), le bras en porte-à-faux (5) présentant une partie de support (16), la partie de support (16) présentant une plaque de base (19) dotée d'un côté intérieur (22) et d'un côté extérieur (21), le côté extérieur (21) étant situé de manière tournée vers l'unité de moteur (51), la plaque de base (19) étant limitée par une paroi périphérique (20) circonférentielle au niveau de sa périphérie, la paroi périphérique (20) s'élevant sur au moins 50% de sa longueur exclusivement à partir du côté intérieur (22) de la plaque de base (19), un arbre d'entraînement (45) entraîné en rotation autour d'un premier axe (47) s'étendant transversalement à la plaque de base (19), et un arbre de sortie (46) monté rotatif autour d'un deuxième axe (48) s'étendant parallèlement à l'arbre d'entraînement (45), la partie de support (16) présentant un système de coordonnées doté d'un axe x et d'un axe y, une ligne de liaison du premier axe (47) au deuxième axe (48) formant l'axe x du système de coordonnées dans une direction d'observation de la partie de support (16) en direction du premier axe (47), et l'axe y étant disposé perpendiculairement à la ligne de liaison et au premier axe (47) et s'étendant centralement entre le premier axe (47) et le deuxième axe (48), et dans chacun des quatre secteurs du système de coordonnées sur le côté intérieur (22) et dans chacun des quatre secteurs du système de coordonnées sur le côté extérieur (21) un segment (A, B, C, D, E, F, G, H) de la partie de support (16) étant respectivement disposé, la partie de support (16) présentant au moins une diagonale spatiale (25, 26) qui s'étend à travers un segment (E, F) sur le côté extérieur (21) et un segment (C, D) opposé par rapport à l'origine (O) du système de coordonnées sur le côté intérieur (22), l'origine (O) du système de coordonnées étant disposée dans la plaque de base (19) entre le côté intérieur (22) et le côté extérieur (21) et centralement entre le premier axe (47) et le deuxième axe (48), au moins une première structure de raidissement (67, 70) s'élevant vers les diagonales spatiales (25, 26) à partir du côté intérieur (22) de la plaque de base (19),
**caractérisé en ce qu'**au moins une deuxième structure de raidissement (60, 61, 62, 65) s'élève à partir du côté extérieur (21) de la plaque de base (19) vers les mêmes diagonales spatiales (25, 26), de sorte que la première structure de raidissement (67, 70) et la deuxième structure de raidissement (60, 61, 62, 65) forment un élément de raidissement (80, 81) s'étendant spatialement en diagonale.

2. Appareil de travail selon la revendication 1,
**caractérisé en ce qu'**au maximum 30% de la surface de la plaque de base (19) présente des structures de raidissement (60, 61, 62, 63, 64, 67, 69) à la fois sur le côté extérieur (21) et sur le côté intérieur (22) dans la même partie de paroi (55, 56) de la plaque de base (19).

3. Appareil de travail selon la revendication 1 ou 2,
**caractérisé en ce que** la première structure de raidissement (67, 70) et la deuxième structure de raidissement (60, 61, 62, 65) comprennent respectivement au moins une région partielle (90, 91, 92, 93) disposée dans la même partie de paroi sur le côté opposé de la plaque de base (19), laquelle région partielle ne présente aucune structure de raidissement et laquelle est réalisée comme une région continue présentant une aire d'au moins 2 cm².

4. Appareil de travail selon l'une des revendications 1 à 3,
**caractérisé en ce que** les structures de raidissement (60, 61, 62, 65, 67, 70) présentent une hauteur nette (n₁, n₂, n₃, n₄, n₅, n₆, n₇, n₈, n₉), la hauteur nette (n₁, n₂, n₃, n₄, n₅, n₆, n₇, n₈, n₉) étant la somme des hauteurs (h₁, h₂, h₃, h₄) des structures de raidissement partielles (60a, 60b, 62a, 62b) mesurées parallèlement au premier axe (47) sur des côtés opposés de la même partie de paroi de la plaque de base (19), les structures de raidissement partielles (60a, 62a) qui s'élèvent sur le côté extérieur (21) étant considérées comme ayant un signe négatif et les structures de raidissement partielles (60b, 62b) qui s'élèvent sur le côté intérieur (22) étant considérées comme ayant un signe positif, la hauteur nette (n₁, n₂, n₃, n₄, n₅, n₆, n₇, n₈, n₉) des structures de raidissement partielles (60, 61, 62, 65, 67, 70) qui s'élèvent vers les mêmes diagonales spatiales (25, 26) changeant de signe le long de la diagonale spatiale et étant égale à zéro en au moins un point (49, 50) qui présente une distance (a, b) d'au maximum 2 cm par rapport à l'origine (O) du système de coordonnées.

5. Appareil de travail selon l'une des revendications 1 à 4,
**caractérisé en ce que**, dans la direction d'observation en direction du premier axe (47), une première diagonale spatiale (25) forme avec l'axe x un angle (α) de 20° à 70°.

6. Appareil de travail selon l'une des revendications 1 à 5,
**caractérisé en ce que**, dans la direction d'observation en direction du premier axe (47), une deuxième diagonale spatiale (26) forme avec l'axe x un angle (β) de -20° à -70°.

7. Appareil de travail selon l'une des revendications 1 à 6,
**caractérisé en ce que** la plaque de base (19) présente une première ouverture (17) à travers laquelle s'étend l'arbre d'entraînement (45), **en ce que** la plaque de base (19) présente une deuxième ouverture (18) à travers laquelle s'étend l'arbre de sortie (46), et **en ce que** la paroi périphérique (20) présente une première partie (23) et une deuxième partie (24) qui s'étendent, par rapport à la ligne de liaison du premier axe (47) au deuxième axe (48), sur un des bords opposés de la plaque de base (19) dans la direction longitudinale du bras en porte-à-faux (5).

8. Appareil de travail selon la revendication 7,
**caractérisé en ce qu'**au moins un élément de raidissement (80, 81) s'étend dans une région entre le premier axe (47) et le deuxième axe (48) à partir de l'une des parties (23, 24) de la paroi périphérique (20) jusqu'à l'autre des parties (23, 24) de la paroi périphérique (20) et à partir de l'un des côtés de la plaque de base (19) jusqu'à l'autre côté de la plaque de base (19), le côté extérieur (21) et le côté intérieur (22) étant les deux côtés de la plaque de base (19).

9. Appareil de travail selon la revendication 7 ou 8,
**caractérisé en ce que** la plaque de base (19) présente, de manière adjacente à la deuxième ouverture (18), une région (59) sans structures de raidissement, laquelle s'étend à partir de la première partie (23) de la paroi périphérique (20) jusqu'à la deuxième partie (24) de la paroi périphérique (20).

10. Appareil de travail selon la revendication 9,
**caractérisé en ce que**, dans la direction d'observation en direction du premier axe (47), la diagonale spatiale (25, 26) croise une partie (23, 24) de la paroi périphérique (20) en un premier point d'intersection (28, 30) et croise l'autre partie (24, 23) de la paroi périphérique (20) en un deuxième point d'intersection (29, 31), le premier point d'intersection (28, 30) présentant par rapport à la première ouverture (17) une distance (c, d) inférieure au diamètre (e, f) d'au moins l'une des ouvertures (17, 18), et la région (59) sans structures de raidissement s'étendant entre le deuxième point d'intersection (29, 31) et la deuxième ouverture (18).

11. Appareil de travail selon la revendication 10,
**caractérisé en ce que** la deuxième ouverture (18) est réalisée au niveau d'un œil de palier (33) qui est entouré par une paroi annulaire (43).

12. Appareil de travail selon la revendication 11,
**caractérisé en ce qu'**une structure de raidissement (64) est disposée sur la paroi annulaire (43), laquelle structure s'étend jusqu'à la paroi périphérique (20), la région (59) sans structures de raidissement étant adjacente à la structure de raidissement (64).

13. Appareil de travail selon l'une des revendications 7 à 12,
**caractérisé en ce qu'**au moins une structure de raidissement (61, 62, 63, 64, 66, 67, 68, 69, 70, 72) comporte une nervure de raidissement (77, 79, 83, 84, 85, 89, 96, 99, 100, 102) s'élevant linéairement hors de la plaque de base (19).

14. Appareil de travail selon la revendication 13,
**caractérisé en ce qu'**au moins une structure de raidissement (60, 62, 65) comporte une cavité de raidissement (87, 94) s'élevant de manière plane hors de la plaque de base (19).

15. Appareil de travail selon la revendication 14,
**caractérisé en ce qu'**au moins la moitié des cavités de raidissement (87, 94) s'élèvent à partir du côté extérieur (21).

16. Appareil de travail selon la revendication 14 ou 15,
**caractérisé en ce qu'**au moins un élément de raidissement (80) comporte au moins une nervure de raidissement (85, 100) et au moins une cavité de raidissement (87), au moins l'une des structures de raidissement (70) parmi la nervure de raidissement (85, 100) et la cavité de raidissement (87) s'élevant à partir du côté intérieur (22) de la plaque de base (19) et au moins une autre des structures de raidissement (60) parmi la nervure de raidissement (85, 100) et la cavité de raidissement (87) s'élevant à partir du côté extérieur (21) de la plaque de base (19).

17. Appareil de travail selon l'une des revendications 13 à 16,
**caractérisé en ce que** la première ouverture (17) est limitée par une paroi (44) et un œil de palier (33) est disposé au niveau de la deuxième ouverture (18), la paroi (44) s'élevant principalement sur le côté intérieur (22) et l'œil de palier (33) s'élevant à partir du côté intérieur (22) et à partir du côté extérieur (21) de la plaque de base (19).
